# EUROPÄISCHE PATENTSCHRIFT

(11) **EP 4 301 543 B1**
(45) Veröffentlichungstag und Bekanntmachung des Hinweises auf die Patenterteilung: **10.06.2026**
(21) Anmeldenummer: 22708902.6
(22) Anmeldetag: 24.02.2022
(51) Int. Cl.: B23K 26/142, B23K 26/38, B23K 26/57

(54) **VORRICHTUNG ZUM BEARBEITEN EINES WERKSTÜCKS**
DEVICE FOR PROCESSING A WORKPIECE
DISPOSITIF PERMETTANT DE TRAITER UNE PIÈCE À TRAVAILLER

(30) Priorität: 02.03.2021 DE 102021105035
(43) Veröffentlichungstag der Anmeldung: 10.01.2024
(73) Patentinhaber: LiSEC Laser Solutions GmbH, 30419 Hannover (DE)
(72) Erfinder: WIENKAMP, Andreas, 32429 Minden (DE)
(74) Vertreter: Beckord & Niedlich Patentanwälte PartG mbB
(86) Internationale Anmeldenummer: PCT/EP2022/054719
(87) Internationale Veröffentlichungsnummer: WO 2022/184555

(56) Entgegenhaltungen:
- DE-A1- 102008 038 119
- DE-B3- 102015 218 650
- DE-U1- 202008 006 110
- US-A1- 2013 122 264
- US-A1- 2016 304 386

## Beschreibung

Die Erfindung betrifft eine Vorrichtung zum Bearbeiten eines Werkstücks, insbesondere aus Glas, mit mindestens einer Lasereinrichtung zur Erzeugung von Laserstrahlung zur Durchführung eines Schneid- und/oder Trennverfahrens und mit einem Abräummodul zum Abräumen von abgetragenem Werkstückmaterial.

Eine ähnliche Vorrichtung ist beispielsweise aus der JP2014 0148 41 A bekannt. Darin wird während der Bearbeitung bzw. Bestrahlung eines Glassubstrats mit einem Laserstrahl Bearbeitungsgas parallel zur Bewegungsrichtung der optischen Achse in der Nähe der Bearbeitung durch den Laserstrahl und entlang der geplanten Bearbeitungslinie (erwarteter Bruch) geblasen, um Bearbeitungsgas und in der Nähe der Bearbeitung erzeugte Rückstände zu entfernen. Weiter umfasst die Schrift eine Entladungseinrichtung auf einer Substratoberfläche sowie eine Entladungseinrichtung auf einer Rückseite des Substrats sowie Blasdüsen und Absaugkanäle, zum Abräumen von Staub und kleineren abgetragenen Werkstückpartikeln.

Es ist Aufgabe der vorliegenden Erfindung, eine verbesserte, multifunktionale Vorrichtung anzugeben, mit der das beim Einbringen eines Schnitts in das Werkstückmaterial mittels des Laserstrahls entstehende abgetragene Material effektiver und insbesondere auch größere Materialteile entfernt werden können.

Diese Aufgabe wird durch eine Vorrichtung gemäß Patentanspruch 1 und ein Verfahren gemäß Patentanspruch 12 gelöst.

Die eingangs genannte Vorrichtung zum Bearbeiten eines Werkstücks, insbesondere aus Glas, (im Folgenden auch als "Bearbeitungsvorrichtung" bezeichnet) umfasst wie erwähnt mindestens eine Lasereinrichtung zur Erzeugung von Laserstrahlung zur Durchführung eines Schneid- und/oder Trennverfahrens, vorzugsweise zum Einbringen eines Schnitts in ein Werkstück entlang einer sich im Wesentlichen in einer Bezugsebene erstreckenden Schnittkontur.

Bei dem Material des Werkstücks handelt es sich um ein Material, das für den nicht-fokussierten Laserstrahl nur eine geringe oder keine Absorption aufweist. Dabei kämen, je nach Art der Laserstrahlung, verschiedene dielektrische Materialien in Frage. Vorzugweise handelt es sich hierbei um ein Glas, besonders bevorzugt Floatglas oder Borosilikatglas. Prinzipiell kann es sich aber auch um andere geeignete Materialien, insbesondere Glasmaterialien handeln, die diese Bedingung erfüllen, wie beispielsweise Saphir, Aluminiumsilikat, Quarzglas, Glaskeramik - um nur einige zu nennen. Im Weiteren wird aber, da Glas bzw. ein Glasmaterial der bevorzugte Werkstoff ist, sofern nicht anders erwähnt ohne Beschränkung der Allgemeinheit, Glas stellvertretend auch für die genannten anderen Werkstoffe verwendet.

Die Bearbeitungsvorrichtung weist zudem zumindest eine Halteeinrichtung für das Werkstück aufweisen. Weiter kann sie eine Fokussiereinrichtung auf, um in das Werkstück auf einer Strahlungseintrittsseite eingestrahlte Laserstrahlung im Bereich einer von der Strahlungseintrittsseite abgewandten Strahlungsaustrittsseite des Werkstücks derart in einem Fokusbereich zu fokussieren, dass im Fokusbereich Werkstückmaterial abgetragen wird. Weiterhin kann die Lasereinrichtung eine Fokusverstelleinheit mit zumindest einer Scaneinheit aufweisen, um den Fokusbereich in einem begrenzten Scanfeld zu bewegen. Ferner kann sie eine Vorschubeinrichtung aufweisen, um die Fokusverstelleinheit mit dem Scanfeld in zumindest einer Richtung parallel zur Bezugsebene relativ zum Werkstück zu bewegen. Eine bevorzugte Bearbeitungsvorrichtung, die auch hier - abgesehen von den erfindungsgemäßen Weiterentwicklungen - eingesetzt werden kann, wird in der DE 10 2020 123 146 beschrieben, auf deren Inhalt hier insoweit verwiesen wird.

Zum Entfernen des abgetragenen Materials aus dem Schnitt weist die Bearbeitungsvorrichtung der DE 10 2020 123 146 auf der Strahlungsaustrittsseite bereits eine Blas-Saug-Düse auf, mit einer zentralen Blasdüse zum Ausblasen des Materials aus dem Schnitt und einer ringförmig um die Blasdüse angeordneten, relativ schmalen Saugöffnung, um das Material abzusaugen. Die Blasdüse und die Saugöffnung sind hier fest miteinander gekoppelt, d. h. sie werden als ein Stück bewegt.

Wie bereits eingangs genannt umfasst die Bearbeitungsvorrichtung ein Abräummodul. Dieses ist vollständig oder zumindest zum größten Teil bzw. überwiegend auf der Strahlungsaustrittsseite angeordnet, je nach konkreter Ausgestaltung bzw. Weiterbildung.

Das Abräummodul umfasst erfindungsgemäß eine, vorzugsweise bewegliche, Absaugeinrichtung zur Erzeugung eines flächigen Absaugfelds auf der Strahlungsaustrittsseite des Werkstücks. Dabei kann das Absaugfeld im Betrieb, d. h. beim Einbringen eines Schnitts in das Werkstück mittels des Laserstrahls, zumindest einen Bereich (bzw. eine Umgebung oder einen "Teilabschnitt") des Schnitts um den aktuellen Fokusbereich, an dem gerade Material aus dem Schnitt abgetragen wird, im begrenzten Scanfeld umfassen.

Mit dem Bereich des Schnitts um den Fokusbereich ist dabei ein Bereich gemeint, der zumindest einen gerade erst geschnittenen Teil einer Schnittfuge des Schnitts sowie den Fokusbereich miteinschließt. Unter dem Absaugfeld ist ein Wirkungsbereich der Absaugeinrichtung zu verstehen.

Vorzugsweise kann das Absaugfeld den gesamten Bereich des Scanfelds umfassen. Praktischerweise kann das Absaugfeld sogar etwas über das Scanfeld hinausragen, so dass es jedenfalls das Scanfeld beinhaltet und ggf. einen gewissen Überlappbereich, um - wie später noch erläutert wird - auch Werkstückteile in der Größe des Scanfelds locker abräumen zu können. Typische bevorzugte Abmessungen für das Absaugfeld werden weiter unten noch erläutert.

Weiter umfasst das Abräummodul eine Vorschubeinrichtung, um das Absaugfeld koordiniert zum Scanfeld in zumindest einer Richtung parallel zur Bezugsebene relativ zum Werkstück zu bewegen. Diese Vorschubeinrichtung könnte mit der obigen Vorschubeinrichtung für die Fokusverstelleinheit - auch teilweise - kombiniert sein, z. B. wenn das Werkstück selbst mittels einer Werkstück-Vorschubeinrichtung in einer Vorschubrichtung entlang einer oder mehrerer Raumrichtungen gegenüber dem Scanfeld und dem Absaugfeld bewegt wird. Diese Werkstück-Vorschubeinrichtung sorgt dann - als gemeinsame Vorschubeinrichtung - zwangsläufig durch Bewegung des Werkstücks für die Relativverstellung zwischen Werkstück einerseits sowie Scanfeld und Absaugfeld andererseits. Dies kann auch nur in eine Raumrichtung erfolgen, wogegen in eine weitere Raumrichtung der Vorschub durch jeweils separate Vorschubeinrichtungen oder Vorschubeinrichtungsteile für die Fokusverstelleinheit und das Abräummodul erfolgt. In jedem Fall könnte auch der Antrieb bzw. die Vorschubeinrichtung des Abräummoduls mechanisch mit der Vorschubeinrichtung für die Fokusverstelleinheit gekoppelt sein.

Alternativ könnte das Abräummodul durch eine vollständig separate Vorschubeinrichtung so gesteuert werden, dass sich das Absaugfeld des Abräummoduls entsprechend mit dem Scanfeld der Lasereinrichtung mitbewegt, d. h. die koordinierte Bewegung erfolgt dann z. B. einfach durch geeignet synchronisierte Steuerbefehle.

Erfindungsgemäß umfasst das Abräummodul zudem eine innerhalb des Absaugfelds der Absaugeinrichtung relativ zum Absaugfeld bewegbare Düse zum Ausblasen von abgetragenem Werkstückmaterial aus dem Schnitt bzw. einer Schnittfuge des Schnitts.

Mit bewegbar innerhalb des Absaugfelds sowie relativ zum Absaugfeld ist gemeint, dass es sich um eine beweglich in der Absaugeinrichtung gelagerte Düse handelt, welche sich im Wesentlichen entkoppelt bzw. autonom von der Bewegung der Absaugeinrichtung innerhalb der Absaugeinrichtung bewegen kann. Dabei ist sie lediglich durch die inneren Abmessungen der Absaugeinrichtung in ihrem Bewegungsradius limitiert bzw. begrenzt.

Bei der Düse kann es sich zum Beispiel um eine Druck- oder Pressluftdüse mit einem Druck- und/oder Pressluftanschluss handeln. Bei dem abgetragenem Werkstückmaterial hingegen handelt es sich insbesondere typischerweise um Glasmaterialabtrag, wie z. B. feiner Glasstaub bzw. Glaspartikel.

In der erfindungsgemäßen Bearbeitungsvorrichtung kann nun - wie bei der Bearbeitungsvorrichtung der DE 10 2020 123 146 - die Schnittfuge durch die passend zum aktuellen Schnittbereich mitgeführte Düse optimal ausgeblasen werden und von der relativ großen Absaugfläche das abgetragene Material, seien es Staub oder auch größere Partikel, nahezu vollständig abgesaugt werden. Dank der bewegungstechnischen Entkopplung von relativ kleiner Düse einerseits und relativ großer Absaugeinrichtung (welche ja für das relativ große Absaugfeld sorgen muss), muss das große Absaugfeld, welches z. B. größer als das Scanfeld sein kann, nicht mit der Blasdüse mitbewegt werden, sondern es kann die relativ leichte Düse sehr schnell dem Schnittbereich, in dem der Fokusbereich aktuell arbeitet, folgen, wogegen die relativ schwere Absaugeinrichtung nur langsam verstellt werden muss, z. B. passend zum jeweiligen Scanfeld, indem sich ohnehin nur der Fokusbereich bewegen kann. Durch das große Absaugfeld ist es leichter, abgetragenes Material zu erfassen, welches mittels der Düse schräg aus einer Schnittfuge herausgeblasen wird.

Abgetragene Werkstückmaterialien können aber nicht nur feiner Staub bzw. Partikel, insbesondere feiner Glasstaub bzw. Glaspartikel, sondern auch im Verhältnis dazu wesentlich größere Nutz- oder Rest-Werkstückteile sein, welche beim Schneiden bzw. Trennen vom übrigen Werkstück abgeschnitten bzw. abgetrennt wurden.

Insbesondere diese Werkstückteile lassen sich vom übrigen Werkstück mit dem Abräummodul vorteilhaft abräumen bzw. wegschaffen, z. B. auch durch die relativ große Absaugfläche der Absaugeinrichtung hindurch. Beispiele hierfür und weitere bevorzugte Möglichkeiten, mit Hilfe des Abräummoduls größere Werkstückteile abzuräumen bzw. wegzuschaffen werden später noch erläutert.

Bei einen erfindungsgemäßen Verfahren zum Bearbeiten eines Werkstücks, insbesondere aus Glas, in der zuvor beschriebenen Vorrichtung bzw. Bearbeitungsvorrichtung wird wie oben erwähnt in das Werkstück auf einer Strahlungseintrittsseite Laserstrahlung eingestrahlt und im Bereich einer von der Strahlungseintrittsseite abgewandten Strahlungsaustrittsseite des Werkstücks derart in einem Fokusbereich fokussiert, dass im Fokusbereich Werkstückmaterial abgetragen wird.

Weiter wird der Fokusbereich zur schichtweisen Abtragung von Material in einem Schnittsegment des Schnitts mittels einer Fokusverstelleinheit in einem begrenzten Scanfeld der Fokusverstelleinheit bewegt. Dabei ist der Fokusbereich mittels der Fokusverstelleinheit in einem begrenzten Scanfeld der Fokusverstelleinheit bewegbar.

Weiterhin wird die Fokusverstelleinheit beispielsweise zur Erweiterung des Schnitts unter Verschiebung des Scanfelds in einer Vorschubrichtung parallel zur Bezugsebene relativ zum Werkstück bewegt.

Ferner wird das Werkstück auf der Strahlungsaustrittsseite im Bereich eines koordiniert mit dem Scanfeld der Fokusverstelleinheit mitbewegten Absaugfelds mittels einer Absaugeinrichtung abgesaugt, so dass zumindest ein Bereich des Schnitts um den Fokusbereich im begrenzten Scanfeld, vorzugsweise der gesamte Bereich des Scanfelds, abgedeckt ist.

Außerdem wird mittels einer innerhalb des Absaugfelds der Absaugeinrichtung relativ zum Absaugfeld bewegten Düse des Abräummoduls z. B. mittels der Laserstrahlung abgetragenes Werkstückmaterial aus dem Schnitt bzw. einer Schnittfuge des Schnitts im Werkstück ausgeblasen.

Durch die erfindungsgemäße Konstruktion wird erreicht, dass beim schichtweisen Abtragen von Werkstückmaterial mittels einer Lasereinrichtung mit dem Absaugfeld das gesamte Scanfeld der Scaneinheit der Lasereinrichtung abgedeckt ist und, dass das Werkstück unter anderem an der Strahlungsaustrittsseite zumindest in einem Bereich des Schnitts um den Fokusbereich abgesaugt werden kann, so dass das abgetragene Werkstückmaterial und/oder gegebenenfalls sogar Werkstückteile vollständig weggeschafft werden können, was ansonsten den weiteren Prozess negativ beeinflussen kann. Weiterhin hält die erfindungsgemäße Konstruktion die gesamte Vorrichtung außerhalb des Absaugfelds sauber, so dass eine Staubbelastung sowohl für die Antriebsmechanik der Vorrichtung als auch für Arbeitskräfte, welche die Vorrichtung steuern bzw. überwachen, weitgehend vermieden wird.

Mit der erfindungsgemäßen Bearbeitungsvorrichtung und dem erfindungsgemäßen Verfahren wird also letztlich die Schnittqualität und -geschwindigkeit sowie die Sauberkeit des Schnitts verbessert, indem Störfaktoren, wie z. B. das abgetragene Werkstückmaterial, minimiert werden. Dabei kann sogar gegebenenfalls die Schneidgeschwindigkeit im Gegensatz zu der bisherigen Methode ohne Qualitätsverlust erhöht werden. Zudem kann das erfindungsgemäße Vorgehen nach Bedarf auch dafür sorgen, dass auch herausgeschnittene bzw. abgetrennte Werkstückteile, wie z. B. Nutz- oder Rest-Werkstückteile, abgeräumt werden, so dass dafür keine weiteren Arbeitsschritte vorgesehen werden müssen und das Werkstück praktisch direkt weiterbearbeitet werden kann, wie dies später noch anhand von bevorzugten Weiterbildungen gezeigt wird.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Vorteilhafterweise kann die Vorrichtung eine Steuereinrichtung umfassen, welche derart ausgebildet ist, um wie erwähnt die Vorrichtung zum Bearbeiten des Werkstücks, beispielsweise zum Einbringen zumindest eines Schnitts in das Werkstück derart zu steuern, dass der Fokusbereich zur schichtweisen Abtragung von Material in einem Schnittsegment des Schnitts mittels der Fokusverstelleinheit im Bereich eines Scanfelds der Fokusverstelleinheit bewegt wird. Weiter kann die Vorrichtung derart gesteuert werden, dass die Fokusverstelleinheit zur Erweiterung des Schnitts unter Verschiebung des Scanfelds in einer Vorschubrichtung bewegt wird.

Ferner kann die Vorrichtung von der Steuereinrichtung so gesteuert werden, dass das Absaugfeld koordiniert, besonders bevorzugt parallel, mit dem Scanfeld der Fokusverstelleinheit mitbewegt und die Düse innerhalb des Absaugfelds der Absaugeinrichtung relativ zum Absaugfeld bewegt wird. Damit ist gemeint, dass die Düse wie oben schon erwähnt weitgehend unabhängig bzw. separiert von der Absaugeinrichtung bewegt werden kann. Sie ist während des Blasbetriebs lediglich auf eine Bewegung innerhalb der Abmessungen der Absaugeinrichtung beschränkt.

Um zumindest den Bereich des Schnitts um den Fokusbereich im begrenzten Scanfeld mit dem Abräummodul abräumen bzw. mit der Absaugeinrichtung des Abräummoduls absaugen und dabei mit der Düse die Schnittfuge optimal ausblasen zu können, kann die Düse, beziehungsweise der von der Düse erzeugte Fluidstrom, vorzugsweise mit dem Fokusbereich koordiniert mitbewegt werden.

Für die weitere Ausgestaltung des Abräummoduls gibt es verschiedene Möglichkeiten.

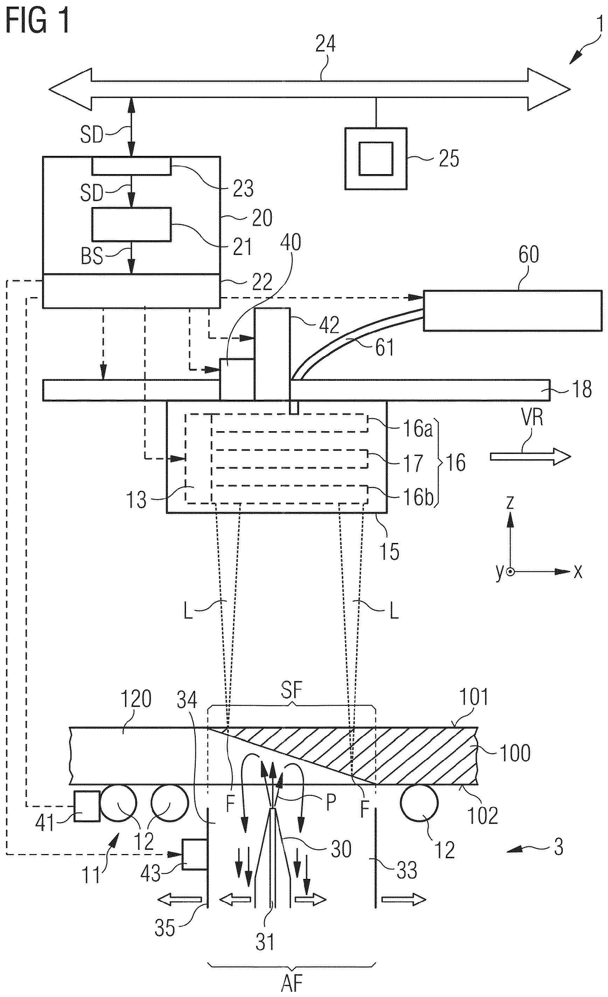

Das Abräummodul könnte sich theoretisch über die gesamte Breite (d. h. in einem weiter unten noch anhand von Figur 1 beschriebenen Ausführbeispiel beispielsweise in y-Richtung, wobei die y-Richtung z. B. quer zu einer Transportrichtung der Werkstücke ausgerichtet sein kann, wenn die Werkstücke durch die Bearbeitungsvorrichtung gefahren werden können) der Vorrichtung bzw. mit einer Halteeinrichtung über die gesamte Breite der Halteeinrichtung, insbesondere eines Rollentisches der Halteeinrichtung erstrecken. Bei einer einfacheren und damit kostengünstigeren Ausführung kann sich die Absaugeinrichtung aber vorzugsweise auch nur über eine Breite von 100 bis 300 mm erstrecken. Konkret könnten beispielsweise in etwa zwei Drittel des Abräummoduls für die Steuerung, die Mechanik etc. belegt sein und das übrige Drittel für das Absaugfeld bzw. den Absaugkasten samt Absaugschacht in der Größe des Absaugfelds. Um den überwiegenden Teil des Abräummoduls, welcher die gesamte Technik etc. umfasst, auf Dauer möglichst sauber zu halten, kann dieser Teil gegenüber dem Bereich des Absaugfelds reinigungstechnisch geschützt werden, indem beispielsweise der Bereich des Absaugfelds von einem möglichst dichten Gehäuse mit entsprechenden Dichtungen, Bürsten etc. umgeben ist.

Besonders bevorzugt weist das Absaugfeld mindestens die Größe des Scanfeldes auf.

Vorzugsweise kann die Absaugeinrichtung insbesondere eine flächige Absaugöffnung umfassen, welche die Größe des Absaugfelds aufweist, um im Absaugfeld flächig gleichmäßig abzusaugen. Dies hat den Vorteil, dass sie das Scanfeld flächenmäßig erfassen bzw. abdecken kann.

Die Absaugöffnung kann dabei besonders bevorzugt rechteckig, insbesondere quadratisch sein.

Wie oben bereits erwähnt, gibt es für das Scanfeld und das Absaugfeld bevorzugte Abmessungen. Typischerweise kann das Absaugfeld dabei wie erwähnt etwas größer sein als das Scanfeld, um eben auch mittels der Lasereinrichtung abgetragenes Werkstückmaterial auf der Fläche des Scanfelds und herausgeschnittene Werkstückteile in derselben Größenordnung wie das Scanfeld mit dem Abräummodul absaugen und abräumen zu können.

Bei den Werkstückteilen, welche wie erwähnt im Verhältnis zum abgetragenen Material meist deutlich größer sind (Partikel vs. Werkstückteile), kann es sich z. B. um ausgeschnittene Nutz- oder Rest-Werkstückteile handeln. Ein typisches Beispiel hierfür ist beispielsweise ein Bohrkern im Zentimeterbereich, welcher aus einem größeren Werkstück herausgeschnitten wurde. Dieser könnte typischerweise z. B. eine kreisrunde Kontur aufweisen, ist aber keinesfalls darauf beschränkt. Weitere Beispiele für Schnittkonturen sind unter anderem in der DE 10 2020 123 146 zu finden. Grundsätzlich sind beliebige Konturen und Formen möglich.

Bei entsprechender Größe der Absaugöffnung können auch gleich solche größeren Werkstückteile ab- bzw. weggeräumt werden, die beim Bearbeiten, beispielsweise beim Einbringen eines solchen Schnitts in das Werkstück, während und nach dem Schneid- und/oder Trennverfahren anfallen. Werden derart große Werkstückteile ausgeschnitten, die größer als die Absaugöffnung des Abräummoduls sind, kann das auszuschneidende Werkstückteil durch Hilfsschnitte so in Teilabschnitte zerlegt werden, dass diese Teilabschnitte vom Abräummodul aufgenommen werden können. Dieses Vorgehen ist insbesondere bei auszuschneidenden Rest-Werkstückteilen vorteilhaft, also bei Werkstückteilen bei denen das Zerschneiden keine Rolle spielt. Die Teilabschnitte können aber auch so sinnvoll gewählt werden, dass zumindest einzelne Teilabschnitte nachher als Nutz-Werkstückteile noch verwendet werden können.

Beispielsweise kann das Scanfeld Abmessungen von ca. mindestens 50x50 mm, 80x80 mm, 100x100 mm 200x200 mm aufweisen. Entsprechend kann das Absaugfeld Abmessungen von vorzugsweise mindestens 60x60 mm, besonders bevorzugt mindestens 90x90 mm, ganz besonders bevorzugt mindestens 110x110 mm und noch weiter bevorzugt mindestens 210x210 mm aufweisen.

Relativ zu den Abmessungen des Absaugfelds kann die Düse wie erwähnt vorzugsweise verhältnismäßig klein ausgebildet sein, so dass sie sich jedenfalls innerhalb des Absaugfelds des Abräummoduls bewegen bzw. verfahren lässt. Hierzu kann die Düse bevorzugt eine Verfahrmechanik im Abräummodul aufweisen, mit der sie relativ zum Absaugfeld und/oder relativ zum Werkstück bewegt werden kann. Die Verfahrmechanik kann dazu mit Mitteln zur bidirektionalen Linearbewegung der Düse in einer parallelen Ebene zum Absaugfeld ausgebildet sein.

Konkret könnte die Düse beispielsweise endseitig an einem Schlitten bzw. Lagerblock befestigt sein, welcher entlang einer ersten, parallel zum Absaugfeld orientierten Führungsschiene (bzw. einer Führungswelle bzw. einer Lineargleitschiene) beweglich gelagert ist. Weiter könnte die erste Führungsschiene bzw. Schiene wiederum auf einem zweiten Schlitten gelagert sein, welcher sich entlang einer zweiten Führungsschiene bzw. Schiene bewegen lässt, welche zweite Schiene orthogonal zur ersten Schiene sowie parallel zur Ebene des Absaugfelds angeordnet ist. Mit einer derartigen Konstruktion und einem entsprechenden Antrieb, z. B. zwei mit einem Motor angetriebene Riemen zur Bewegung der Schlitten entlang der Schienen, samt Steuerung kann die Düse beliebig innerhalb des Absaugfelds positioniert und verfahren werden, um beispielsweise einer durch die Scaneinheit vorgegebenen Schnittkontur eines Schnitts koordiniert zu folgen und dabei wie vorgesehen Werkstückmaterial aus einer Schnittfuge des Schnitts auszublasen. Die Geschwindigkeit und Dynamik der Düse ist in der Regel aufgrund der mechanischen Trägheit nicht so hoch wie die des Fokuspunktes bzw. Fokusbereichs des Lasers. Es ist aber auch nicht notwendig, dass sich die Düse für den Staubaustrag ebenfalls mit der Geschwindigkeit des Fokuspunktes bewegt. Erfahrungsgemäß kann es ausreichen, dass sie sich deutlich langsamer bewegt und beispielsweise wiederholt den gerade vom Fokus aktiv bearbeiteten Schnittbereich abfährt.

Die Absaugeinrichtung bzw. das Abräummodul kann in der Regel nochmals eine der Blasdüse bzw. Düse gegenüber deutlich verringerte Geschwindigkeit aufweisen. Beispielsweise könnte die Absaugeinrichtung einfach mittels der oben bereits erwähnten Vorschubeinrichtung, mit der auch die Fokusverstelleinheit mit dem Scanfeld in zumindest einer Richtung parallel zur Bezugsebene relativ zum Werkstück bewegt wird, verfahren werden. Das Abräummodul kann vorzugsweise in Kombination mit der Werkstückbewegung hinsichtlich Geschwindigkeit und Richtung so koordiniert bewegt werden, dass das Abräummodul nach Möglichkeit immer mehr oder weniger mittig unter dem gerade aktiv bearbeiteten Teilschnittbereich liegt bzw. mittig zur Bohrkontur.

Für die Formgestaltung des Abräummoduls gibt es ebenfalls verschiedene Möglichkeiten. Beispielweise kann die Absaugeinrichtung, wie bevorzugt, als ein im Grundriss rechteckiger Absaugkasten mit rechteckiger Absaugöffnung und einem sich von der Absaugöffnung in Richtung der Schwerkraft, hier in z-Richtung nach unten vom Werkstück weg, erstreckenden Abräum- bzw. Absaugschacht, wie weiter unten noch erläutert wird, ausgebildet sein. Der Absaugkasten kann zum Schutz der Mitarbeiter gegen austretende Laserstrahlung und auch austretenden Staub dicht ausgestaltet sein.

Ein solcher quaderförmige Absaugkasten mit in z-Richtung länglichem Absaugschacht kann konkret also beispielsweise auf einer stirnseitigen Oberseite die besagte Absaugöffnung aufweisen. Auf der gegenüberliegenden stirnseitigen Unterseite am anderen Ende des Absaug- bzw. Abräumschachts kann der Absaugkasten eine weitere verschließbare Öffnung aufweisen, welche sich bei Bedarf zumindest zeitweise, vorzugsweise vollflächig über den gesamten Grundriss des Absaugschachts, öffnen bzw. schließen lässt, um aufgenommene Werkstückteile auslassen zu können.

Eine der seitlichen Mantelflächen des quaderförmigen Absaugschachts des Absaugkastens zwischen der Oberseite und der Unterseite kann eine schlitzförmige Einfahröffnung für die Düse umfassen. Durch diese schlitzförmige Einfahröffnung kann die Düse, welche z. B. an einem längeren Ausleger bzw. Arm von ihrer Verfahrmechanik in einer parallelen Ebene zum Absaugfeld gehalten werden kann, unter dem Werkstück in das Absaugfeld hineinragen, um dort im Absaugfeld koordiniert zumindest in einem Bereich des Schnitts innerhalb des Absaugfelds bewegt zu werden.

Vorzugsweise kann die Düse in einer seitlichen Parkposition außerhalb einer Falllinie des gelösten, insbesondere ausgeschnittenen, Werkstückteils des Werkstücks positionierbar sein. Mit anderen Worten lässt sie sich in einen Randbereich des Absaugfelds in eine Parkposition manövrieren. Insbesondere bietet sich als Parkposition der Düse ein Randbereich des Absaugfelds auf der Seite der Verfahrmechanik an, so dass sich der Ausleger der Düse weitestgehend außerhalb des Absaugfelds befindet und die Düse nur noch einen minimalen Platz innerhalb des Absaugfelds einnimmt.

Besonders bevorzugt lässt sie sich zumindest teilweise aus dem Absaugkasten hinaus verfahren, um dort eine Parkposition einzunehmen.

Bei der Parkposition handelt es sich demzufolge um eine Position, in der die Düse den Luftstrom der Absaugeinrichtung nur noch minimal beeinträchtigt, das Herabfallen eines Bohrkerns oder Werkstückausschnitts nicht behindert und Platz für eine weiter unten erwähnte und ggf. zum Einsatz kommende Abstützvorrichtung schafft. Zudem kann die Blasfunktion bzw. der Blasbetrieb der Düse typischerweise gerade mittels eines steuerbaren Ventils ausgeschaltet bzw. deaktiviert sein.

Vorzugsweise kann die Absaugeinrichtung einen kastenförmigen Sammelbehälter zum Aufsammeln von abgetragenem Werkstückmaterial und/oder von zumindest einem abgeschnittenen oder abgetrennten Werkstückteil des Werkstücks umfassen. Ein solcher Sammelbehälter kann beispielsweise unterhalb des Absaugfelds, insbesondere am unteren Ende des bereits erwähnten Absaug- bzw. Abräumschachts des Absaugkastens angeordnet sein. Er dient sowohl als vorübergehendes Zwischenlager für abgeschnittene und/oder abgetrennte größere Werkstückteile, als auch als Auffangbehälter bzw. Sammelstelle für kleinere abgesaugte bzw. herunterfallende Werkstückteile bzw. abgetragenes Werkstückmaterial.

Vorzugsweise kann der Sammelbehälter mindestens eine integrierte Entleerungsöffnung umfassen. Mit einer solchen Entleerungsöffnung ist eine einfache Öffnung zum temporären Entleeren gemeint, die allerdings im Schneid bzw. Trennbetrieb der Vorrichtung zumindest überwiegend geschlossen ist.

Diese kann besonders bevorzugt derart ausgebildet und angeordnet sein, dass sich der Sammelbehälter damit zur Entleerung in Richtung der Schwerkraft nach unten hin öffnen lässt. So kann der Sammelbehälter z. B. wenn eine Leerung erforderlich ist, sehr einfach ohne zusätzlich Kraftausübung unter Nutzung der Schwerkraft, vom Prinzip ähnlich wie bei einem Silo, entleert werden.

Weiter bevorzugt kann die Entleerungsöffnung hierzu eine kippbare, ganz besonders bevorzugt einseitig aufklappbare Klappe, nach Art einer schrägen Rutsche zum Entleeren umfassen. In Kombination mit einem Förderband oder eines Abfallbehälters ließe sich so das abgetragene bzw. gesammelte Werkstückmaterial sehr einfach entsorgen.

An dieser Stelle sei erwähnt, dass sich bei einer schräg- bzw. nahezu vertikal arbeitenden Vorrichtung zum Bearbeiten eines Werkstücks in einer nahezu vertikalen Ausrichtung die besagte Entleerungsöffnung ebenfalls in Richtung der Schwerkraft öffnen lassen kann. Mit anderen Worten kann sie sich also auf einer Bodenseite der schräg bzw. nahezu vertikal arbeitenden Vorrichtung befinden.

Die Erfindung ist aber nicht auf eine einzelne Entleerungsöffnung beschränkt. Ebenso könnte sich eine weitere Entleerungsöffnung an einer seitlichen Mantelfläche des Absaugschachts zum Sammelbehälter bzw. des Sammelbehälters befinden, um beispielsweise größere Werkstückteile zur Seite hin entnehmen zu können.

Die Möglichkeit der Positionierung der Düse in einer seitlichen Parkposition ist nicht nur vorteilhaft, wenn ein aus dem übrigen Werkstück ausgeschnittenes bzw. gelöstes Werkstückteil abgeräumt bzw. weggeschaffen werden soll, sondern auch dann, wenn sie gerade nicht gebraucht wird oder anderen Komponenten in einem zentralen Bereich des Absaugfelds im Wege stehen würde.

Vorzugsweise kann das Abräummodul eine Abstützvorrichtung zur Abstützung zumindest eines vom übrigen Werkstück z. B. ab- oder heraus- zu trennenden Werkstückteils in der Vorrichtung umfassen, wobei die Abstützvorrichtung zumindest das herauszutrennende Werkstückteil bis zur vollständigen Trennung vom übrigen Werkstück stabilisiert bzw. stabilisierend untergreift.

Bis zum Abräumen vor der vollständigen Trennung meint, dass die Abstützvorrichtung zumindest für den letzten Bruchteil des vorgesehenen Schnitts - bevor der verbleibende Bruchteil des Werkstücks bzw. noch nicht abgetragene Teil entlang der Schnittfuge das Gewicht des Werkstückteils aufgrund der Gewichtskraft nicht mehr halten könnte - die Abstützvorrichtung beispielsweise stabilisierend unter das Werkstück gefahren wird.

Dies sorgt dafür, dass die Lage des Teils, hier des Werkstückteils, innerhalb des umgebenen Teils, d. h. beispielsweise eines Rest-Werkstückteils oder eines zumindest teilweise nutzbaren Nutz-Werkstückteils, stabilisiert wird und so das Werkstückteil spannungsfrei bis zur vollständigen Trennung vom übrigen Werkstück in derselben Position gehalten werden kann, ehe es anschließend abgeräumt bzw. weggeschaffen wird. Ein Verkippen des herausgetrennten Werkstückteils und ggf. dadurch verursachtes Verklemmen innerhalb der Bohrung oder der geschaffenen Ausschnittöffnung wird so vermieden.

Unabhängig davon kann durch die Abstützung ein unkontrolliertes Ablösen des ausgetrennten Werkstückteils und dadurch verursachtes "chipping" (zu Deutsch "Absplitterung") an den Werkstückkanten reduziert oder ganz vermieden werden.

Dies ist insbesondere bei Bohrkernen besonders vorteilhaft, die nicht um den Schwerpunkt herum symmetrisch ausgebildet sind, beispielsweise eine Art asymmetrische "Sanduhrform" aufweisen.

Vorzugsweise kann die Abstützvorrichtung einen Antrieb zum Verfahren bzw. Verbringen in eine horizontale werkstückhaltende Stützposition umfassen.

Mit der Stützposition ist hier eine Position der Abstützvorrichtung gemeint, in der sich die Abstützvorrichtung in Richtung der Schwerkraft unmittelbar unterhalb des Werkstücks befindet, so, dass das Werkstück mit der Abstützvorrichtung in Kontakt steht.

Bei dem Antrieb kann es sich beispielsweise um einen pneumatischen, mechanischen, elektrischen oder hydraulischen Antrieb handeln.

Die Bewegung, mit der die Abstützvorrichtung durch den Antrieb in eine horizontale werkstückhaltende Stützposition verbracht wird, kann bevorzugt einen Schwenkvorgang umfassen. Z. B. kann die Abstützvorrichtung von einer vertikalen Position an einer Seite unterhalb des Absaugfelds in die horizontale Position unter das abzustützende Werkstückteil hochgeschwenkt werden und wieder zurückgeschwenkt werden, wenn das Werkstückteil endgültig herausgelöst wurde oder um das Werkstückteil herauszunehmen.

Alternativ oder zusätzlich kann die Vorrichtung angetriebene Mittel für eine Bewegung parallel zum Absaugfeld, wie z. B. einen auf Führungsschienen gelagerten angetriebenen Rollschlitten, und Mittel für eine Bewegung senkrecht zum Absaugfeld, d. h. zum Werkstück hin bzw. weg vom Werkstück, wie z. B. einen pneumatisch betriebenen Zylinder bzw. Pneumatikstempel aufweisen. Damit lässt sich die Abstützvorrichtung auch in eine horizontale werkstückhaltende Stützposition mittels einer horizontalen Verfahrbewegung und einer daran anschließenden vertikalen Verfahrbewegung unter das Werkstück zu verfahren.

Vorzugsweise kann die Abstützvorrichtung werkstückseitig eine (beispielsweise ebene bzw. flache) Stützfläche aufweisen. Werkstückseitig meint, dass bei einem üblichen Abstützen des Werkstücks von unten auf der Werkstückunterseite die Stützfläche z. B. auf der Oberseite der Abstützvorrichtung ausgebildet ist.

Besonders bevorzugt kann die Stützfläche eine Vielzahl von gleichmäßig verteilt angeordneten, erhabenen Oberflächenstrukturen aufweisen. Weiter bevorzugt kann es sich bei den erhabenen bzw. aus der Oberfläche reliefartig hervortretenden Oberflächenstrukturen um Rippen oder dergleichen handeln. Es können aber auch Rillen oder punktartige Vertiefungen in die Oberflächen eingefräst sein. die Oberflächenstrukturen können auch als in einem Abstand zueinander gleichmäßig verteilt angeordnete Oberflächenstrukturen im Sinne von Stiften ausgebildet sein, zwischen denen die Absaugeinrichtung absaugen und die Düse ausblasen könnte.

Hierzu kann die Stützfläche bevorzugt auch eine Vielzahl von Durchgangsbohrungen aufweisen bzw. gitter- oder siebartig aufgebaut sein.

Für das Material der Stützfläche bietet sich ein Material an, das die Laserstrahlung aushält, da die Stützfläche noch während des Schneidens unmittelbar unterhalb des Werkstücks platziert wird. Zusätzlich kann es vorteilhaft sein, dass das Material für Laserstrahlung intransparent ist, um möglicherweise beim Prozess austretende Laserstrahlung einzufangen bzw. zu blockieren. Beispielsweise kann die Stützfläche daher aus Metall oder dergleichen ausgebildet sein. Die Oberflächenstrukturen könnten bei einer metallenen Stützfläche beispielsweise eingefräst werden.

Alternativ könnte die Stützfläche der Abstützvorrichtung auch aus Kunststoffmaterial wie z. B. Polyoxymethylen (POM), Polypropylen, PTFE (Teflon) gefertigt werden. Diese Kunststoffe vertragen Laserstrahlung, sind im Vergleich zu Metall deutlich leichter und lassen sich zudem beispielsweise im Spritzgussverfahren zu einer Platte mit erhabenen Oberflächenstrukturen spritzen. Die genannten Kunststoffe haben zudem den Vorteil, dass sie eine geringere Materialhärte besitzen als das Werkstück und somit keine Kratzer oder sonstigen Beschädigungen verursachen.

Mit einer ebenen Stützfläche mit erhabenen Oberflächenstrukturen, welche unterstützend unter das Werkstück gegen die Werkstückunterseite manövriert bzw. gefahren wird, kann das Werkstück gleichmäßig mit möglichst wenig Kontaktfläche bzw. Berührungsfläche gestützt bzw. gelagert werden. Dabei sorgen die Oberflächenstrukturen, wie z. B. Rillen oder Stifte dafür, dass die mit der Abstützvorrichtung beim Herauffahren bzw. Aufwärtsfahren in die Stützposition verdrängte Luft bzw. das verdrängte Luftvolumen seitlich durch die Rillen bzw. zwischen den Stiften und Zwischenräumen entweichen kann, so dass das Werkstück oder der Werkstückteil nicht ungewollt "angelupft" bzw. angehoben wird und damit Spannungen induziert werden.

Zum Herausheben oder Herauslösen eines zumindest vorgeschnittenen bzw. nahezu ausgeschnittenen Werkstückteils vom übrigen Werkstück gibt es verschiedene Möglichkeiten. Abhängig von der Größe des Werkstückteils, z. B. eines Bohrkerns oder eines Werkstückausschnitts, insbesondere Glasausschnitts könnte es grundsätzlich auch mittels des mit der Absaugeinrichtung erzeugten Unterdrucks vom übrigen Werkstück ausgeworfen und dann abgeräumt werden.

Vorzugsweise kann das Abräummodul aber eine Werkstückteilauswurfeinrichtung (im Folgenden auch Materialauswurfeinrichtung genannt), insbesondere eine Glasauswurfeinrichtung, umfassen, um einen vorgeschnittenen Werkstückteil, vorzugsweise einen Rest-Werkstückteil, des Werkstücks vom übrigen Werkstück zu trennen. Besonders bevorzugt kann die Materialauswurfeinrichtung sogar dazu ausgebildet sein, das Werkstückteil zusätzlich noch aus dem Abräummodul hinauszubefördern bzw. wegzuschaffen.

Beispiele für eine Materialauswurfeinrichtung sind beispielsweise ein oder mehrere geeignet gesteuerte Saugnäpfe, Stößel oder Druckluftstöße.

Speziell die Verwendung eines Saugnapfs ist vor allem dann von Vorteil, wenn die herausgelösten bzw. herauszulösenden Werkstückteile keine bzw. zumindest nicht zur Gänze Rest-Werkstückteile bzw. Abfallprodukte sind, sondern zumindest teilweise spätere Nutz-Werkstückteile sind oder werden sollen. Denn mit einem Saugnapf lassen sich Nutz-Werkstückteile sehr sanft und präzise aus dem übrigen Werkstück herauslösen. Dabei entstehen beim Lösen oder durch das Hineinfallen in den Abräumschacht keine Schäden, wie z. B. "chipping" ("Absplitterungen"), Ausmuschelungen etc. am Werkstück bzw. Werkstückteil.

Vorzugsweise kann die Materialauswurfeinrichtung einen steuerbar beweglich gelagerten Vakuumgreifer umfassen, um einen vorgeschnittenen Werkstückteil des Werkstücks zur Strahlungseintrittsseite des Werkstücks hin kontrolliert herauszulösen. Nach der absoluten Trennung vom übrigen Werkstück kann der Werkstückteil aus dem übrigen Werkstück herausgehoben werden.

Mit dem oben bereits erwähnten Abräumschacht lässt sich ein herausgeschnittenes Werkstückteil, wie z. B. ein Bohrkern oder ein Glasausschnitt durch den Abräumschacht in einen Sammelbehälter des Abräummoduls wegschaffen bzw. abräumen. Im einfachsten Fall kann ein herausgeschnittenes Werkstückteil frei nach unten in einen Sammelbehälter des Abräummoduls hineinfallen, um von dort zu einem beliebigen Zeitpunkt aus dem Abräummodul hinausbefördert werden zu können. Beispielsweise könnte das Werkstückteil direkt im Anschluss über eine Klappe des Sammelbehälters automatisch nach draußen befördert bzw. per Vakuumgreifer oder dergleichen entnommen werden.

Für das oben bereits beschriebene Verfahren zum Heraustrennen eines Werkstückteils gibt es weitere Möglichkeiten.

Vorzugsweise kann ein vom übrigen Werkstück ab- oder herauszutrennendes Werkstückteil solange vom Werkstück mit der Lasereinrichtung vorgeschnitten werden, bis nur noch zumindest ein Steg zwischen dem übrigen Werkstück und dem Werkstückteil verbleibt, und abschließend der zumindest eine verbliebene Steg kontrolliert durchtrennt wird.

Genauer gesagt kann der Schnitt mittels schichtweiser Abtragung von Werkstückmaterial solange mit der Lasereinrichtung geschnitten werden, bis nur noch zumindest ein sich in Richtung des Rest-Werkstückteils verjüngender Steg mit einem Bruchteil der gesamten Materialstärke des Werkstücks i. d. R. wenigen 100 µm verbleibt. Am sich verjüngenden Ende des Stegs oder der Stege entsteht aufgrund der Verjüngung eine Sollbruchstelle, an der das Rest-Werkstückteil durch sein eigenes Gewicht abreißen wird. Dieses Abreißen kann natürlich auch zusätzlich oder ausschließlich durch die genannten mechanischen Materialauswurfeinrichtungen ausgelöst werden oder auch durch den sich durch die Absaugung ergebenden Unterdruck und der dadurch auf das Rest-Werkstückteil wirkenden Kraft auf der Strahlungsaustrittsseite. Abschließend kann der zumindest eine verbliebene Stegrest vorzugsweise mittels der Lasereinrichtung kontrolliert vom Nutz-Werkstück abgetrennt werden. Das Durchtrennen kann aber auch mechanisch bewerkstelligt werden.

Der Steg wird so ausgebildet, dass er sich stets vom Nutz-Werkstückteil weg hin zum Rest-Werkstückteil verjüngt, so dass sich die dünnste Stelle des Stegs, an welcher der Steg beispielsweise bei einem mechanischen Durchtrennen erwartungsgemäß nachgibt und abreißt, im Bereich der Schnittfuge in einem ausreichenden Abstand zum Nutz-Werkstückteil am Rest-Werkstückteil befindet. Damit wird verhindert, dass beim Durchtrennen möglicherweise am tatsächlichen, späteren Nutz-Werkstückteil Absplitterungen oder Ausmuschelungen entstehen, also der Nutz-Werkstückteil beschädigt wird.

Zusätzlich kann bei einem mechanischen Durchtrennen auch noch darauf geachtet werden, dass der Steg so vom übrigen Werkstück abgetrennt wird, dass zumindest immer noch ein Stegrest am Nutz-Werkstückteil verbleibt, so dass Absplitterungen lediglich am Stegrest zu erwarten wären, nicht aber am Nutz-Werkstückteil jenseits des Stegrestes. Bei einem sehr dünnen Steg (z. B. bei einem leichteren Werkstückteil), welcher mittels der Lasereinrichtung durchtrennt wird, kann der Steg bei der Abtrennung auch direkt mit der Lasereinrichtung vollständig zerstäubt bzw. pulverisiert werden, so dass damit bereits eine ausreichend saubere Kante erzeugt werden kann, die keiner weiteren Nachbearbeitung bzw. Nachbehandlung bedarf.

Generell kann mittels des vorübergehenden Einbringens bzw. Übriglassens von mehreren Stegen zwischen dem Werkstückteil und dem übrigen Werkstück, ein Verkeilen, Verklemmen bzw. Verkippen des Werkstückteils im übrigen Werkstück ausgeschlossen werden. Die Anzahl und Position der Stege wird praktischerweise abhängig vom Gewicht und der Geometrie des Bohrkerns bzw. Werkstückausschnitts stets so gewählt, dass das Gewicht des Werkstückteils noch sicher durch die verbliebenen Stege gehalten wird (jedoch keine unnötigen Stege eingebracht werden müssen), bevor diese dann abschließend durchtrennt werden. Mithilfe von Tests und entsprechenden Berechnungen kann dabei eine passende Formel entwickelt werden, wie groß und wo die einzelnen Stege sein müssen bzw. wie viele Stege vorerst stehen gelassen werden. Die Stege können dabei beispielsweise eine Stärke bzw. eine Restdicke von 10 - bis wenigen 100 µm Glas aufweisen. Zudem weisen die Stege senkrecht zur ihrer Längserstreckung entlang der Schnittfuge eine maximale Breite entsprechend der maximalen Breite der Schnittfuge auf. An dieser Stelle sei darauf verwiesen, dass grundsätzlich immer ein einzelner entsprechend großer Steg ausreicht, um ein Werkstückteil im übrigen Werkstück gerade noch zu halten. Jedoch hat es sich als vorteilhaft erwiesen, die Last auf mehrere kleinere entsprechende Stege gleichmäßig zu verteilen, so dass also in der Regel, jedoch nicht zwingend, mehrere Stege stehen gelassen werden.

Bei einer Einbringung von Stegen ist grundsätzlich keine komplexe, aufwändige Abstützvorrichtung unterhalb des Werkstücks zum Halten des Werkstückteils beim Vorschneiden nötig.

Optional kann jedoch der Werkstückteil zusätzlich zur Halteeinrichtung mittels einer Abstützvorrichtung unterstützend gehalten werden, während der zumindest eine verbliebene Steg kontrolliert getrennt wird. Wenn die Abstützvorrichtung sich dabei unter dem Werkstück befindet und die Blasdüse bzw. Düse wie oben beschrieben in der Parkposition steht, kann der Rest des Schneidvorgangs zur Durchtrennung des Stegs oder der Stege problemlos ohne Fluidstrom erfolgen, weil nur noch eine kleine Materialmenge bzw. Staub entsteht, da ja nur noch wenige 100µm abgetragen werden müssen.

Bei der Abstützvorrichtung kann es sich vorzugsweise um die oben bereits beschriebene Abstützvorrichtung des Abräummoduls handeln, welche zum Halten des Werkstückteils auf einer Werkstückunterseite tragend unter das Werkstückteil verfahren wird, um abschließend mittels der Abstützvorrichtung den zumindest einen verbliebenen Steg kontrolliert zu durchtrennen.

Mit einer kontrollierten Durchtrennung ist dabei ein Trennvorgang gemeint, bei dem darauf geachtet wird, dass möglichst kein sogenanntes "chipping" beim Herauslösen bzw. Durchtrennen an der Kante des Werkstückteils bzw. zumindest nicht an der Kante eines Nutz-Werkstückteils auftritt.

Sofern noch vorhanden, können als abschließender Schritt vorzugsweise noch die am Werkstückteil und/oder am übrigen Werkstück verbliebenen Stegreste des zumindest einen, zuvor durchtrennten Stegs unter Bildung einer sauberen Kante entfernt werden. Dies kann besonders bevorzugt mittels der Lasereinrichtung erfolgen. Grundsätzlich können hierfür allerdings auch weiche oder harte Polierscheiben oder ein gerichteter Wasserstrahl zum Polieren bzw. Abschleifen eingesetzt werden.

Vorzugsweise kann zumindest ein bereits vorgeschnittenes vom übrigen Werkstück ab- oder herauszutrennendes Werkstückteil mittels eines durch die Absaugeinrichtung erzeugten Unterdrucks getrennt bzw. ausgelöst werden.

Alternativ oder zusätzlich kann es kontrolliert mittels eines bereits erwähnten Vakuumgreifers oder Saugnapfs des Abräummoduls auf der Strahlungsaustrittsseite getrennt bzw. ausgelöst werden. Besonders bevorzugt könnte es auch auf der Strahlungseintrittsseite herausgelöst werden, zumindest, wenn dort ein entsprechender Vakuumgreifer ohnehin bereits vorhanden ist, z. B. zum Aufladen des Werkstücks auf eine Rollenbahn bzw. Halteeinrichtung für das Werkstück.

Wieder alternativ oder zusätzlich kann das Werkstückteil mittels zumindest eines steuerbar beweglich gelagerten Stößels auf der Strahlungseintrittsseite getrennt bzw. ausgelöst werden. Dieser sorgt für einen ausreichenden Impuls bzw. Hub, so dass das bereits vorgeschnittene, also nur noch entlang eines Bruchteils der gesamten Materialstärke gehaltene Werkstückteil daraufhin aus dem übrigen Werkstück herausgelöst wird. In Kombination mit einer Abstützvorrichtung könnte diese zuvor mit einem minimalen Abstand unter das Werkstück gefahren werden und das herausgelöste Werkstückteil direkt aufnehmen bzw. auffangen, um es anschließend abzuräumen bzw. wegzuschaffen.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen schematisch:
Figur 1 eine Seitenansicht eines ersten Ausführungsbeispiels einer erfindungsgemäßen Bearbeitungsvorrichtung bei einem Einbringen eines Schnitts in eine Glasplatte,
Figur 2 eine weitere Seitenansicht des Ausführungsbeispiels aus Figur 1, nun mit Fokus auf ein Abräummodul der Bearbeitungsvorrichtung unterhalb der Glasplatte,
Figur 3 eine weitere Seitenansicht des Ausführungsbeispiels aus Figur 1, mit der Düse in einer seitlichen Parkposition,
Figur 4 eine Seitenansicht eines zweiten Ausführungsbeispiels einer erfindungsgemäßen Bearbeitungsvorrichtung mit einer schwenkbaren Abstützvorrichtung,
Figur 5 eine vereinfachte Seitenansicht eines dritten Ausführungsbeispiels einer erfindungsgemäßen Bearbeitungsvorrichtung, hier in Form einer "Vertikalbohrmaschine", zur Darstellung möglicher Varianten zum Glasauswurf,
Figur 6 eine weitere vereinfachte Seitenansicht des dritten Ausführungsbeispiels aus Figur 5, zur Darstellung einer weiteren möglichen Variante zum Glasauswurf,
Figur 7 eine vereinfachte Seitenansicht des Ausführungsbeispiels gemäß 1 bis 3, hier jedoch mit einem vergrößerten Ausschnitt zur Darstellung eines Schneidverfahrens mit in die Glasplatte eingebrachten Stegen,
Figur 8 eine detaillierte perspektivische Darstellung eines vierten Ausführungsbeispiels eines isoliert dargestellten Abräummoduls für eine erfindungsgemäße Bearbeitungsvorrichtung,
Figur 9 eine perspektivische Darstellung des Ausführungsbeispiels des Abräummoduls aus Figur 8, diesmal mit Gehäuse.

Die nachfolgenden Ausführungsbeispiele werden mit Bezug auf eine Bearbeitungsvorrichtung 1 zum Schneiden von Flachglas 100 mit Hilfe von Laserstrahlung L beschrieben, wie sie grob schematisch in den Figuren 1 bis 3 dargestellt ist. Diese Bearbeitungsvorrichtung 1 kann bis auf die erfindungsgemäßen Weiterbildungen insbesondere wie in der DE 10 2020 123 146 aufgebaut sein. Insoweit wird deren Inhalt somit hier inkorporiert.

Es wird aber explizit noch einmal darauf hingewiesen, dass - auch wenn eine Ausgestaltung als Glasbearbeitungsvorrichtung 1 bevorzugt ist - die Erfindung nicht auf Bearbeitungsvorrichtungen zur Bearbeitung von Glas, insbesondere Flachglas, beispielsweise Floatglas, beschränkt ist, sondern auch dazu dienen kann, andere, insbesondere dielektrische Materialien, zu bearbeiten, bei denen es möglich ist, einen elektromagnetischen Strahl durch das Material hindurch zu strahlen und "rückseitig" von der Strahlungsquelle aus gesehen auf der Strahlungsaustrittsseite Material abzutragen, indem dort der Strahl fokussiert wird.

Die in Figur 1 dargestellte Glasbearbeitungsvorrichtung 1 weist zum einen eine Halteeinrichtung 11 für das zu bearbeitende Werkstück 100, hier wie gesagt Flachglas 100, auf. Die Halteeinrichtung 11 umfasst hier eine Rollenbahn 11 mit mehreren Rollen 12, auf der das Flachglas 100 herantransportiert und in einer geeigneten Stellung positioniert werden kann. Zusätzlich weist diese Halteeinrichtung 11 (nicht dargestellte) Fixiermittel auf, um das Flachglas 100 in der gewünschten Position vorübergehend zu positionieren, wie z. B. automatisch verstellbare Klemmen, Anschläge, Schieber, Vakuumsauger, Transportgurte, ein Lufttisch oder dergleichen.

Auf der von der Halteeinrichtung 11 abliegenden Seite des Flachglases 100 befindet sich in einem Abstand von der Oberfläche des Flachglases 100 eine Fokusverstelleinheit 15, von der aus Laserstrahlung L auf das Flachglas 100 abgestrahlt wird. Diese Laserstrahlung L tritt dann auf der zur Fokusverstelleinheit 15 weisenden Strahlungseintrittsseite 101 des Flachglases 100 in das Flachglas 100 ein und wird mit Hilfe einer Fokussiereinrichtung 16 der Fokusverstelleinheit 15 an der der Strahlungseintrittsseite 101 gegenüberliegenden Strahlungsaustrittsseite 102 des Flachglases 100 so in einem Fokusbereich F fokussiert (im Folgenden auch manchmal nur kurz als "Fokus" F bezeichnet), dass dort Material abgetragen wird. Mit dieser Strahlungsaustrittsseite 102 liegt das Flachglas 100 an den Rollen 12 der Halteeinrichtung 11 an.

Die Fokusverstelleinheit 15 umfasst weiter eine Scaneinheit 17, mit der der Fokusbereich F innerhalb eines (durch die Fokusverstelleinheit 15 begrenzten) Scanfelds SF in der Flachglasplatte 100 verstellt werden kann. Die Fokusverstelleinheit 15 wird daher nachfolgend auch einfach kurz als "3D-Scankopf" 15 bezeichnet. Diese Scaneinheit 17 ist beispielsweise ein Galvanometerscanner mit Galvanometerspiegeln, welche einen von einem Laser 60, hier über einen Lichtleiter 61, zugeführten Laserstrahl L relativ schnell verschwenkt, um die gewünschte Positionsänderung des Fokusbereiches F im Scanfeld SF zu erreichen. Prinzipiell kann der Laserstrahl L aber auch vom Laser über ein Spiegelsystem zur Fokusverstelleinheit 15 geführt werden.

Außerdem umfasst die Fokussiereinrichtung 16 hier einen sogenannten z-Shifter 16a. Mit dem z-Shifter 16a kann der Fokusbereich F in der Höhe, d. h. hier entlang der Strahlrichtung des Laserstrahls L, welche wie bereits oben erwähnt der optischen Achse der Fokussiereinrichtung 16 entspricht, verstellt werden. Die Strahlrichtung verläuft hier direkt von der Fokusverstelleinheit 15 senkrecht auf die Strahlungseintrittsseite 101 der Flachglasplatte 100.

Die Fokussiereinrichtung 16 weist bei diesem Ausführungsbeispiel u. a. eine sogenannte F-Theta-Linse 16b auf, sodass dafür gesorgt wird, dass trotz der Verschwenkung des Laserstrahls L mittels der Scaneinheit 17, der Laserstrahl L hier immer senkrecht von oben auf die Strahlungseintrittsseite 101 der Flachglasplatte 100 auftrifft. Bei geeignet ausgestaltetem bzw. geeignet angesteuertem z-Shifter kann ggf. auf die F-Theta-Linse 16b verzichtet werden, da der z-Shifter immer passend die Brennweite so verstellen kann, dass der Fokus beim Scannen immer auf einer Ebene bleibt.

In Figur 1 ist ein Bezugskoordinatensystem mit den Richtungen x, y, z eingezeichnet. Dabei erstreckt sich die x-/y-Ebene parallel zu der Auflagefläche der Rollenbahn 11 bzw. Halteeinrichtung 11 der Bearbeitungsvorrichtung 1 und somit in dem dargestellten Fall auch parallel zur Oberfläche der Strahlungseintrittsseite 101 und der Strahlungsaustrittsseite 102 des Werkstücks 100. Senkrecht darauf steht die dritte Achse, die z-Richtung.

Der 3D-Scankopf kann wie erwähnt ein eigenes Bezugskoordinatensystem aufweisen, wobei die x-/y-Ebene dieses Koordinatensystems dann bevorzugt parallel zu einer Austrittsfläche des Laserstrahls (z.B. einem Austrittsfenster oder der F-Theta-Linse) aus dem 3D-Scankopf liegt und die z-Achse wieder senkrecht dazu steht und parallel zur optischen Achse der Fokussiereinrichtung, wenn die Scaneinrichtung sich in einer Nullstellung befindet, d.h. der Laserstrahl nicht abgelenkt wird. Im bevorzugten, vorliegenden Fall liegen die beiden Bezugskoordinatensysteme in gleicher Ausrichtung zueinander. Wäre dies nicht der Fall, könnte auf einfache Weise zwischen diesen Koordinatensystemen umgerechnet werden, wenn die Orientierung des 3D-Scankopfs zur Bezugsebene der Halteeinrichtung bzw. des Werkstücks bekannt ist, was aber in der Regel der Fall ist, da die Lage des 3D-Scankopfs ja motorisch gesteuert bzw. vorgegeben wird.

Parallel zu der x-/y-Ebene kann wie erwähnt der Fokusbereich F der Laserstrahlung L mit Hilfe der Scaneinheit 17 in einem begrenzten Scanfeld SF schnell bewegt werden. In z-Richtung erfolgt die Bewegung des Fokusbereichs F in erster Linie mithilfe des z-Shifters 16a, was entsprechend schnell erfolgen kann, jedoch in der Regel nur in einem begrenzten Höhenverstellbereich, was zu einem begrenzten Scanvolumen führt, welches durch die Grundfläche des Scanfelds SF und den maximalen Höhenverstellbereich definiert wird.

Insgesamt kann so also der Fokusbereich F im Werkstück 100 in allen drei Raumrichtungen x, y, z durch den 3D-Scankopf 15 verstellt werden. Die Verstellbarkeit des Fokusbereichs F durch den 3D-Scankopf 15 innerhalb des Scanfelds SF ist in Figur 1 dadurch symbolisiert, dass der Laserstrahl L bzw. der Fokusbereich F hier nebeneinander in zwei verschiedenen Positionen gezeigt ist, die nacheinander angefahren werden können. Wie bereits oben erwähnt kann es sein, dass sich die vektoriellen Bewegungsrichtungen des Fokusbereichs F in dem dargestellten Bezugskoordinatensystem durch die einzelnen Komponenten, je nach Aufbau dieser Komponenten, nicht voneinander trennen lassen. Dennoch ist eine gezielte Bewegung in jeder Raumrichtung separat möglich, in dem die Fokussiereinrichtung 16 und die Scaneinheit 17 so koordiniert angesteuert werden, dass teilweise eine Bewegung des Fokusbereichs F durch die eine Komponente wieder durch die andere Komponente im gewünschten Maße kompensiert wird.

Die Fokusverstelleinheit 15 weist hier eine eigene Scankopfsteuerung 13 auf. Dieser müssen nur noch die aktuellen Raumkoordinaten in drei Richtungen x, y, z übergeben werden und es werden automatisch die Scaneinheit 17 und die Fokussierungseinrichtung 16 passend koordiniert zueinander angesteuert, damit der Fokusbereich F an der gewünschten Stelle liegt.

In dem dargestellten Ausführungsbeispiel befindet sich der z-Shifter 16a oberhalb der Scaneinheit 17 und die F-Theta-Linse 16b der Fokussiereinrichtung 16 unterhalb der Scaneinheit 17. Es sei lediglich der Vollständigkeit halber noch einmal erwähnt, dass eine Fokussiereinrichtung auch mit anderen Komponenten realisierbar wäre, z. B. einer einfachen Fokussierlinse nach dem z-Shifter vor der Fokussiereinrichtung oder nur einer F-Theta-Linse hinter der Fokussiereinrichtung in Kombination mit einer schnellen mechanischen z-Verstellung der Scaneinheit 17 gemeinsam mit der F-Theta-Linse 16b mittels einer Höhenverfahreinrichtung 42.

Wie bereits erwähnt, kann zum Beispiel auch die Brechung des Laserstrahls beim Eintritt in das Werkstück 100 jeweils vorab berechnet und bereits in der Scaneinheit 17 berücksichtigt werden, so dass die Position des Fokusbereichs F "vorab korrigiert" wird. Genauso kann auch eine f-theta Korrektur vorgenommen werden, falls ohne eine F-Theta-Linse gearbeitet wird. Diese Korrektur könnte beispielsweise dann von einer entsprechend ausgestalteten Scankopfsteuerung 13 durchgeführt werden.

Wird der Fokusbereich F parallel zur x-/y-Ebene koordiniert bewegt und wird dabei, kontinuierlich oder schrittweise, der Fokusbereich F durch den z-Shifter in der z-Richtung nach oben bewegt, wird nach und nach Material von der Strahlungsaustrittsseite 102 abgetragen und der Fokusbereich F dringt immer weiter in das Material ein und erzeugt dort einen Einschnitt, der letztendlich bis auf die Strahlungseintrittsseite 101 durchgeführt werden kann, um so in das Flachglas 100 auch einen durchgehenden Schnitt 110 einzubringen. Verschiedene Techniken hierzu werden später noch genauer erläutert.

Um den durch das Scanfeld SF an sich begrenzten Arbeitsbereich des 3D-Scankopfs 15 zu erweitern (genauer zu verschieben) und längere Schnitte 110 im Flachglas 100 einbringen zu können, ist der 3D-Scankopf 15 mittels einer Vorschubeinrichtung 40, 41 relativ zum Flachglas 100 in einer (beliebigen) Vorschubrichtung VR bewegbar, welche ebenfalls parallel zur x-/y-Ebene liegt. In dem dargestellten Ausführungsbeispiel ist die Vorschubeinrichtung 40, 41 mehrteilig und ermöglicht sowohl eine absolute Bewegung des 3D-Scankopfs 15 in zwei (vektoriellen) Richtungen parallel zur x-/y-Ebene, als auch eine absolute Bewegung des Werkstücks 100 in zumindest einer Richtung parallel zur x-/y-Ebene.

Hierzu ist der 3D-Scankopf 15 zum einen an einer brückenartigen Traverse 18 bzw. Brücke 18 in Längsrichtung der Traverse 18 beweglich gelagert, die sich hier quer über die Halteeinrichtung 11 bzw. Rollenbahn 11 erstreckt. Vorzugsweise wird die Traverse 18 aber, wie später noch erläutert, parallel zu den Rollen 12 (also dann in Figur 1 in y-Richtung) ausgerichtet, um eine Querbewegung zur Bewegung des Werkstücks 100 zu ermöglichen. Mittels einer (motorischen) Vorschubeinrichtung 40 kann der 3D-Scankopf 15 in dieser Längsrichtung der Traverse 18 verstellt werden.

Außerdem umfasst die Bearbeitungsvorrichtung 1 eine Vorschubeinrichtung 41 (genauer einen "halterungsseitigen" Teil der Vorschubeinrichtung 40, 41), die hier durch eine Antriebseinheit zur Bewegung der Rollen 12 der Rollenbahn 11 repräsentiert wird, wodurch das Werkstück 100 bzw. Flachglas 100 auf der Halteeinrichtung 11 senkrecht zur Längserstreckung der Rollen 12 bewegt werden kann.

Somit ist, durch eine Bewegung des 3D-Scankopfs 15 ggf. simultan mit einer unter dem Werkstück 100 befindlichen Düse 30 (die später noch genauer beschrieben wird) in x-/y-Richtung und ein abhängig vom Bearbeitungsverfahren intervallartiges oder kontinuierliches Verfahren des Werkstücks in x-Richtung, jede Position auf dem Werkstück 10 zur Bearbeitung erreichbar.

Eine Bewegung des 3D-Scankopfs 15 senkrecht zur Längsachse dieser Traverse 18 ist auch möglich, indem diese Traverse 18 wiederum endseitig, z. B. an Schienen, gelagert ist und insgesamt senkrecht zu seiner Längserstreckung motorisch bzw. automatisch bewegt werden kann. Dies ist in Figur 1 nicht dargestellt, sondern die Vorschubeinrichtung 40 an der Traverse 18 soll hier die gesamte Vorschubeinrichtung 40 (genauer den "scankopfseitigen" Teil der Vorschubeinrichtung 40, 41) zur Verstellung des 3D-Scankopfs 15 in x- und y-Richtung symbolisieren.

Dabei würde dann vorteilhafterweise sichergestellt, dass der Laserstrahl L nicht auf die Rollen 12 trifft und ein Abräummodul 3 (umfassend eine Düse 30 und eine Absaugöffnung 34 einer Absaugeinrichtung 33, wie dies ebenfalls später noch beschrieben wird) gemeinsam mit der Traverse 18 in x-Richtung verfahren wird. Hierzu könnte ein ganzes Rollenbett der Rollenbahn 11 verschiebbar gelagert sein, so dass die größere Lücke zwischen den Rollen 12, welche Platz für das Abräummodul 3 mit seinem Absaugfeld AF und das darüber befindliche Scanfeld SF gewährt, simultan zur Vorschubbewegung des 3D-Scankopfs 15 in x-Richtung mitbewegt wird. Dies kann durch ein umlaufendes Rollenbett oder Gurtmaterial oder durch sich verändernde Rollenabstände realisiert werden.

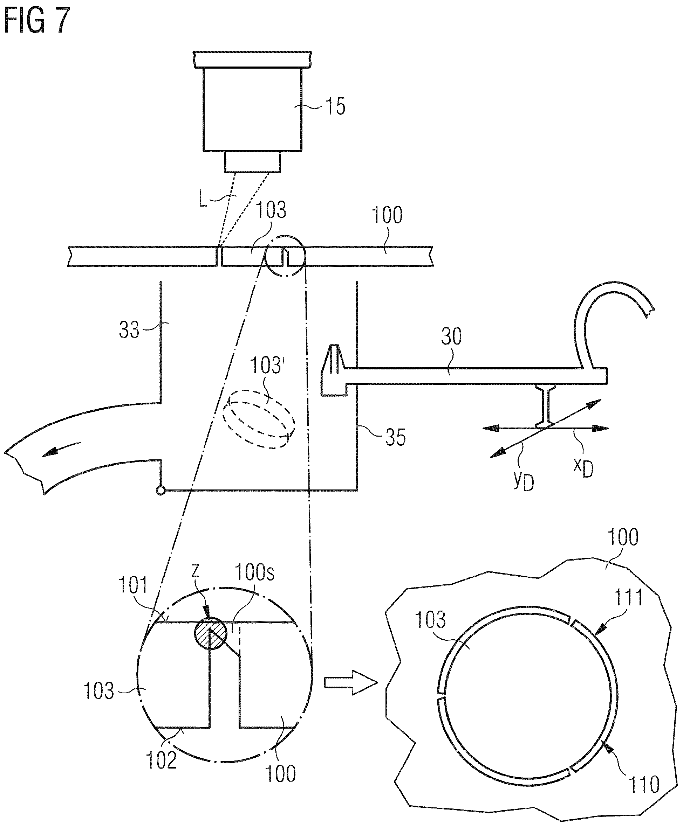

In Figur 1 ist zwar wegen der besseren Darstellung die Traverse 18 senkrecht zu den Rollen 12 gezeigt. Bevorzugt ist es jedoch eher so, dass sich die Traverse 18 parallel zu den Rollen 12 erstreckt und eine Bewegung des 3D-Scankopfs 15 entlang dieser Traverse 18 entsprechend parallel zu den Rollen 12 verläuft. Durch eine solche Konstruktion kann sehr einfach dafür gesorgt werden, dass sich das Scanfeld SF des 3D-Scankopfs 15 (in der Projektion vom 3D-Scankopf 15 aus betrachtet) immer in einer Position (einem Freiraum) zwischen zwei etwas weiter voneinander beabstandeten Rollen 12 der Rollenbahn 11 befindet, d. h., dass das Werkstück 100 in diesem Bereich auf der Strahlungsaustrittsseite 102 frei zugänglich ist und nicht auf einer Rolle 12 aufliegt. In der senkrechten Richtung dazu, in der x-/y-Ebene, kann die Relativbewegung zwischen 3D-Scankopf 15 und Flachglas 100 durch eine Bewegung des Flachglases 100 entlang bzw. auf der Rollenbahn 11 erfolgen. Insbesondere aber, wenn die Bearbeitungsvorrichtung 1 so realisierbar ist, dass ein ausreichend großer Freiraum auf der Strahlungsaustrittsseite 102 der Glasplatte 100 besteht bzw. wenn die Schnittkontur 111 (ein Beispiel einer kreisrunden Schnittkontur 111 ist in der Aufsicht von Figur 7 gezeigt) des einzubringenden Schnitts 110 nicht über diesen Freiraum hinausgeht, könnte die Vorschubbewegung auch in beiden Richtungen x und y nur durch einen "scankopfseitigen" Teil der Vorschubeinrichtung 40 erfolgen.

Es ist also vorteilhaft, zwischen zwei Rollen 12 der Rollenbahn 11 einen so großen Abstand zu lassen, dass im Scanfeld SF selbst gearbeitet werden kann, ohne dass eine Rolle 12 durch den Laserstrahl L getroffen wird und dass im Absaugfeld AF gearbeitet werden kann, ohne dass eine Rolle 12 durch die Düse 30 unterhalb des Werkstücks 100 erwischt wird also die Düse 30 so viel Platz hat, dass sie dicht an die Werkstückoberfläche der Strahlungsaustrittsseite 102 herangeführt werden kann und sich gleichzeitig in der x-/y-Ebene frei im Absaugfeld AF der Absaugeinrichtung 33 bewegen kann und sich ggf. zusätzlich noch simultan mit der Vorschubeinrichtung 40 parallel zur Traverse 18 bewegen kann.

Um eine Bewegung des Fokusbereichs F auch in z-Richtung über den Bewegungsbereich der Fokussiereinrichtung 16, z. B. des z-Shifters 16a, hinaus zu erweitern, ist der 3D-Scankopf 15 hier mittels einer Höhenverfahreinrichtung 42 auch in Strahlrichtung (z-Richtung) an der Traverse 18 verfahrbar.

Bei dem Laser 60 handelt es sich hier um einen Festkörperlaser (z. B. Faserlaser), besonders bevorzugt einen Neodymium-Laser. Prinzipiell können aber, wie oben bereits erläutert, auch andere Lasertypen eingesetzt werden, je nachdem, welches Material bearbeitet werden soll. In dem in Figur 1 dargestellten Ausführungsbeispiel steht nur eine Bestrahlungsressource, d. h. ein Laser 60, zur Verfügung. Grundsätzlich ist es aber auch möglich, mehrere Bestrahlungsressourcen zu nutzen, um mit mehreren Strahlen arbeiten zu können und damit z. B. die Prozessgeschwindigkeit zu erhöhen, wie dies später noch erläutert wird. Ebenso könnten mehrere Scanköpfe eingesetzt werden. An dieser Stelle sei noch einmal auf die DE 10 2020 123 146 verwiesen. Sämtliche darin beschriebenen Komponenten, Steuertechniken und Bestrahlungsstrategien zum Einbringen eines Schnitts in ein Werkstück, wie z. B. der "Blockmodus", bei dem die Scaneinheit nach einem schichtweisen Abtragen von Material in einem ersten Schnittsegment (bzw. Block) einer Schnittkontur versetzt wird und Material schichtweise in einem weiteren Schnittsegment der Schnittkontur abgetragen wird, und der quasi-kontinuierliche bzw. kontinuierliche Modus, bei dem die Schichten im Wesentlichen schräg von der Bearbeitungsseite in Richtung auf die Strahlungseintrittsseite verlaufen und dabei das Schnittsegment durch die kontinuierliche Bewegung der Scaneinheit entlang der Schnittkontur schichtweise erweitert wird, etc., sind auch hier nutzbar.

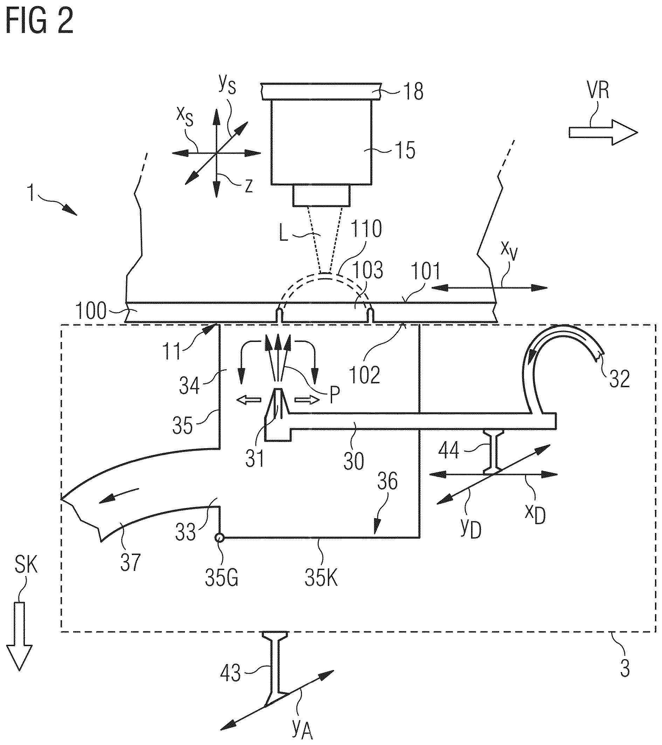

Wie besonders gut anhand der Seitenansicht von Figur 2 zu erkennen ist, befindet sich unterhalb des Werkstücks 100 (z. B. zwischen zwei hier nicht dargestellten Rollen) wie bereits erwähnt ein Abräummodul 3 mit einer Absaugeinrichtung 33 zur Erzeugung eines relativ großen, flächigen Absaugfelds AF mit einer innerhalb des Absaugfelds AF der Absaugeinrichtung 33 relativ zur Absaugeinrichtung 33 sowie zum Werkstück 100 beweglich gelagerten Düse 30.

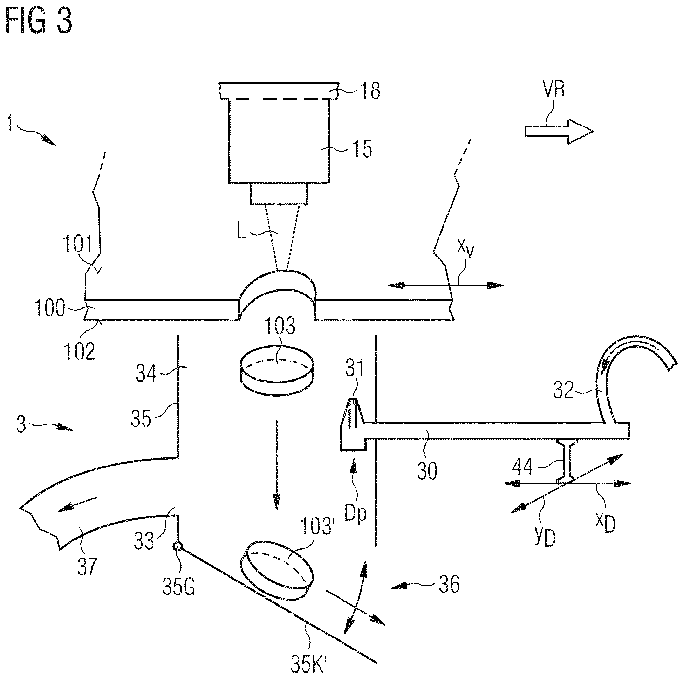

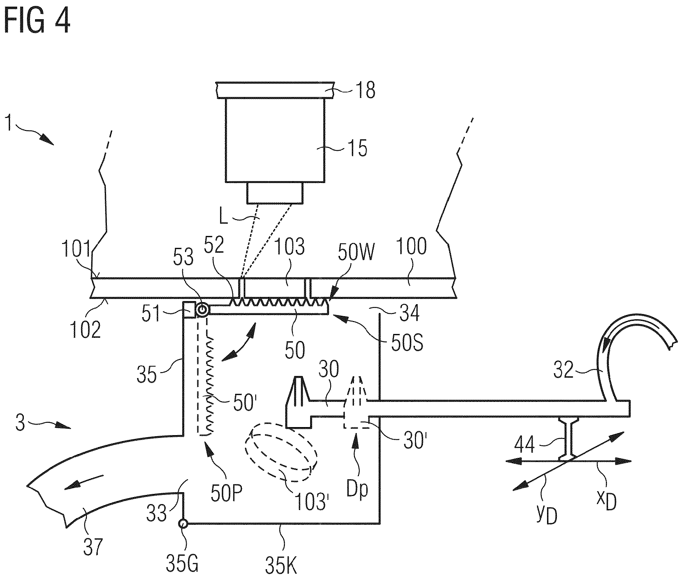

An dieser Stelle sei kurz erwähnt, dass in Figur 2 wie auch in den Figuren 3 und 4 das Werkstück 100 und die Raumrichtungen der Anschaulichkeit halber perspektivisch angedeutet sind, die übrigen Komponenten jedoch jeweils von der Seite gezeigt sind.

Von der Düse 30 aus kann gezielt auf die Strahlungsaustrittsseite 102 des Flachglases 100 in den Bereich des Scanfelds SF, in dem der Fokusbereich F aktuell bewegt wird, ein Fluidstrom P, vorzugsweise ein Gasstrom P in Form eines Pressluftstrahls P, abgestrahlt werden. Die Pressluft wird über einen Zuluft-Anschluss 32 für die Düse 30 durch einen Düsenkanal 31 der Düse 30 zugeführt. Die Fluidbestrahlung unterstützt eine Entfernung des abgetragenen Materials aus dem eingefügten Schnitt 110.

Die Absaugeinrichtung 33 weist als Saugeingang 34 hier eine Saugöffnung 34 auf, die sich flächig im Bereich des Absaugfelds AF, also um die Düse 30 herum erstreckt. Über diesen Saugeingang 34 kann von der Absaugeinrichtung 33 das gelöste Material in einen Absaugkasten 35 der Absaugeinrichtung 33 und von dort über eine Absaugung 37 bzw. Abluft 37 seitlich am Absaugkasten 35 abgesaugt werden, um beispielsweise gefiltert und gesammelt zu werden. Die Absaugeinrichtung 33 dient hier dem Einfangen des beim Prozess entstehenden Staubes und hat im Vergleich zu dem gezielt mit hohem Druck einstrahlenden Fluidstrom P auf das Austragen innerhalb des Schnittspaltes oder der Bohrung eher geringeren Einfluss. Die Abluft 37 bzw. Absaugung 37 der Absaugeinrichtung 33 kann zweckmäßigerweise mit einem Gitter oder Abweisblech ausgestattet sein, um das Einsaugen größerer in den Absaugkasten 35 bzw. Absaugschacht der Absaugeinrichtung 33 herabfallender Werkstückteile zu verhindern (nicht dargestellt).

Außerdem dient das Abräummodul 3 zum Aufnehmen bzw. Abräumen von ausgeschnittenen Werkstückteilen 103' (siehe Figur 3). Dazu wird die Düse 30 nach einem ausreichenden Vorschneiden der Schnittfuge des Schnitts 110 beispielsweise entlang einer Schnittkontur 111, welche um ein auszuschneidendes Werkstückteil 103 verläuft, in einer seitlichen Parkposition D_{P} (siehe Figur 3) innerhalb des Absaugkastens 35 positioniert, so dass das Werkstückteil 103 nach der Trennung vom übrigen umgebenden Werkstück 100 im einfachsten Fall einfach im freien Fall in den Absaugkasten 35 hineinfallen kann. Der Absaugkasten 35 kann dazu bei Bedarf bodenseitig auf der Innenseite gepolstert sein (nicht dargestellt).

Um aufgenommene Werkstückteile 103, 103' wieder aus dem Abräummodul 3 entnehmen zu können, weist der Absaugkasten 35 des Abräummoduls 3 hier bodenseitig eine über ein einseitiges Klappengelenk 35G aufklappbare Klappe 35K auf. In einer geöffneten Stellung der Klappe 35K' (siehe z. B. Figur 3) lassen sich über die entstehende Entleerungsöffnung 36 Werkstückteile 103' aus dem Absaugkasten 35 absondern. Diese können beispielsweise mittels eines (nicht dargestellten) Förderbands anschließend wegbefördert werden oder in einen weiteren Behälter fallen.

Beide Maßnahmen (insbesondere die Beaufschlagung mit Pressluft und gegebenenfalls auch das Absaugen) können wie bereits erwähnt dazu beitragen, dass die Schnittbreite geringer gehalten und somit die Prozessgeschwindigkeit erhöht werden kann.

Das komplette Abräummodul 3 wird wie bereits erwähnt mithilfe einer geeigneten Halteeinrichtung mit der Fokusverstelleinheit 15 mehr oder weniger synchron mitbewegt. Dies kann an einer unter dem Werkstück befindlichen parallel zur Traverse 18 ausgerichteten weiteren Traverse erfolgen, an welcher das Abräummodul 3 mittels einer (motorischen) Vorschubeinrichtung 43 oder dergleichen verfahren werden kann. Ebenso könnte ggf. -je nach konkreter Ausgestaltung - diese Traverse quer zu ihrer Längsrichtung bewegt werden, um eine Vorschubbewegung des Abräummoduls 3 in zwei Richtungen (x- und y-Richtung) zu erlauben.

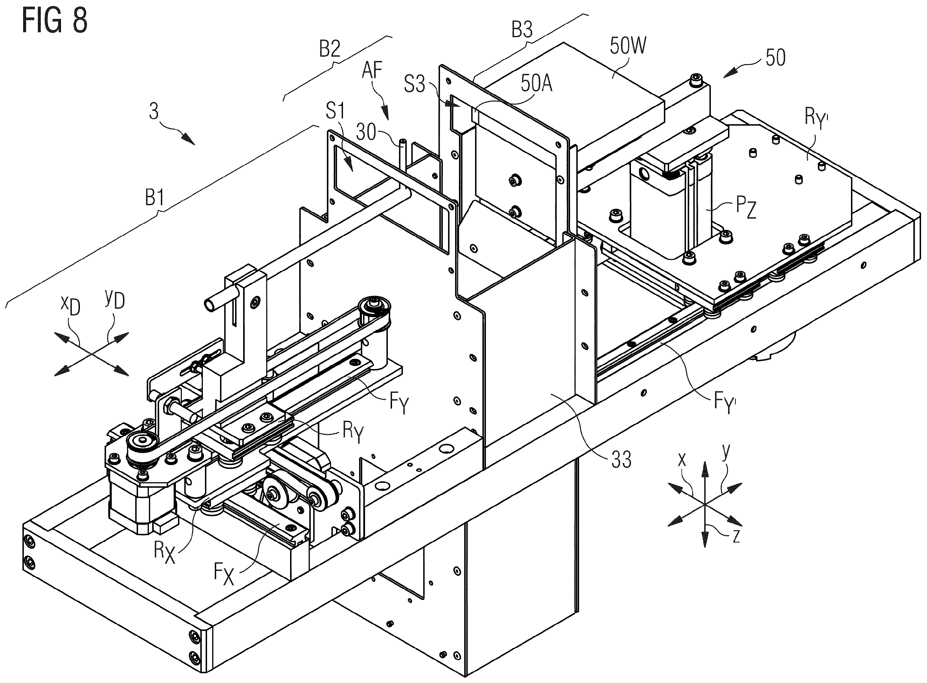

Um abgetragenes Werkstückmaterial aus dem aktuellen Schnittbereich auszublasen, d. h. im Wesentlichen dem aktuellen Bereich des Schnitts folgen zu können, in dem sich gerade der Fokusbereich F der Scaneinheit 17 bewegt, und dabei wenig Masse bewegen zu müssen, ist die Düse 30, wie unter anderem in Figur 2 dargestellt, innerhalb der Absaugeinrichtung 33 in zwei Raumrichtungen (vektorielle Düsenbewegungsrichtungen x_{D}, y_{D}) sowohl relativ zur Absaugeinrichtung 33 als auch relativ zum Werkstück 100 parallel zur Oberfläche des Rollentisches 11 bewegbar. Dies erlaubt es, dass die Düse 30 mit dem Fokus F der Scaneinheit 17 mitbewegt bzw. geführt werden kann, wobei die Düse 30 z. B. eine verlangsamt "schwingende", oszillierende Bewegung entlang des gerade aktiven Schneidevorgangs innerhalb des Scanfeldes SF bzw. innerhalb des Absaugfelds AF der Absaugeinrichtung 33 vollführen kann. Dazu weist die Düse 30 eine eigene Verfahrmechanik 44 auf. Ein konkretes Ausführungsbeispiel für eine solche Verfahrmechanik 44 ist in Figur 8 gezeigt. In beiden Richtungen x_{D}, y_{D} ist die Düse 30 allerdings auf einen Bewegungsspielraum innerhalb des Absaugfelds AF der Absaugeinrichtung 33 beschränkt. Um einer Bewegung des Scankopfs 15 zur Erweiterung des Schnitts über das aktuelle Scanfeld SF hinaus in vektorieller Richtung yᵥ folgen zu können, ist wie gesagt das Abräummodul 3 mit der Absaugeinrichtung 33 und der Düse 30 in der Richtung (vektorielle Absaugeinrichtungsbewegungsrichtung y_{A}) senkrecht zur Vorschubrichtung VR, in der das Flachglas 100 auf der Rollenbahn 11 bewegt wird, parallel zur Oberfläche des Rollentisches 11 bewegbar.

Durch die mehr oder weniger synchrone bzw. parallele Bewegung des Absaugfelds AF mit dem Scanfeld SF ist die Düse 30 in beiden Richtungen x_{D}, y_{D} innerhalb der Absaugeinrichtung 33 so weit bewegbar, wie auch der Fokusbereich F innerhalb des vom 3D-Scankopf 15 jeweils realisierten Scanfelds SF oberhalb der Rollenbahn 11 parallel zu den Rollen 12 bewegt werden kann. Auf diese Weise ist es möglich, die Düse 30 innerhalb des Absaugfelds AF der Absaugeinrichtung 33 immer passend zur aktuellen Umgebung bzw. aktuell geschnittenen Schnittfuge des Fokusbereichs F mitzuführen.

Sämtliche Komponenten der Glasbearbeitungsvorrichtung 1, insbesondere der Laser 60, der 3D-Scankopf 15 bzw. die darin befindliche Scaneinheit 17 und die Fokussiereinrichtung 16, die Vorschubeinrichtung 40, 41 und die Höhenverfahreinrichtung 42 können ebenso wie das Abräummodul 3 mit der Absaugeinrichtung 33 und der innerhalb der Absaugeinrichtung 33 bewegbaren Düse 30 sowie der Vorschubeinrichtung 43 des Abräummoduls 3 durch eine Steuereinrichtung 20 koordiniert angesteuert werden. Die Steuereinrichtung 20 weist hierzu eine Steuerschnittstelle 22 auf, an die die verschiedenen Komponenten 3, 15, 40, 41, 42, 43 ,44, 30, 33, 60 angeschlossen sind, wobei hier die Kommunikation mit dem 3D-Scankopf 15 über dessen interne Scankopfsteuerung 13 erfolgt, die wiederum die anderen Komponenten 16a, 16b, 17 ansteuert.

Die Steuereinrichtung weist hier zudem eine Schnittstelle 23 auf, über die die Bearbeitungsvorrichtung 1, hier z. B. über einen Bus 24 oder eine andere Datenverbindung, mit einem Terminal 25 mit einer Benutzerschnittstelle, z. B. einem Display, oder dergleichen gekoppelt sein kann. Über dieses Terminal 25 kann ein Bediener die Steuereinrichtung 20 und somit die gesamte Bearbeitungsvorrichtung 1 steuern. Grundsätzlich kann dieses Terminal 25 auch in die Steuereinrichtung 20 integriert sein oder umgekehrt. Ein solches Terminal 25 kann auch beispielsweise ein mit geeigneter Software ausgestatteter Computer sein.

Beispielsweise über das Terminal 25 oder über andere an der Schnittstelle 23 angeschlossene Einheiten, können der Steuereinrichtung 20 Steuerdaten SD zugeführt werden, die vorgeben, in welcher Form das Werkstück, hier die Flachglasplatte 100, zu bearbeiten ist. In solchen Steuerdaten SD können z. B. die Schnitte und/oder Bohrungen etc. definiert sein und beispielsweise in Form von CAD-Daten des fertigen Werkstücks vorliegen.

Die Steuerdaten SD können beispielsweise innerhalb einer Recheneinheit 21 (Bahnberechnungseinheit 21) in geeignete Bestrahlungssteuerdaten BS umgewandelt werden, welche in Abhängigkeit von den Steuerdaten SD gemäß einer vorgegebenen Steuerstrategie u. a. genau die Scanbahnen festlegt, d. h. wie der Fokusbereich F der Laserstrahlung L im Werkstück 100 entlanggeführt werden muss, um die durch die Steuerdaten SD vorgegebenen Schnitte, insbesondere Bohrungen, einzubringen. Die Bestrahlungssteuerdaten BS enthalten hierzu sämtliche Steuerdaten SD für den Laser 60, die Scaneinheit 17, die Fokussiereinrichtung 16, die Vorschubeinrichtung 40, 41 (also insbesondere die Geometriedaten, welche den Ort im gewählten Bezugs-Koordinatensystem definieren) etc. Hierzu können Informationen über die ortsabhängig einzubringende Strahlungsleistung, Repetitionsraten, Verweildauern etc. gehören.

Grundsätzlich könnten die Bestrahlungssteuerdaten BS auch direkt schon in einem anderen Rechner, beispielsweise in dem Terminal 25, erzeugt worden sein, d. h. es werden dort schon Steuerdaten SD, beispielsweise vom CAD-Format, in geeignete Bestrahlungssteuerdaten BS umgesetzt und dann der Steuereinrichtung 20 übergeben. Ein für die Bestrahlungssteuerdaten BS besonders geeignetes Datenformat ist z. B. g-code, welches sämtliche Bahndaten, Geschwindigkeiten, Laserparameter (Pulsenergie, Repetitionsrate, Laser-Ein-Aus-Schaltbefehle) usw. enthält. Es kann aber auch vorteilhaft sein, für die Motorachsen und die Fokusverstelleinheit verschiedene Steuerungsdaten oder Datenformate bereitzustellen. Der in Figur 1 dargestellte Aufbau hat den Vorteil, dass die Steuereinrichtung 20 einfach nur mit Steuerdaten SD in Form von herkömmlichen CAD-Daten oder dergleichen beliefert werden muss, und die Steuereinrichtung 20 ist dann in der Lage, geeignete Bestrahlungssteuerdaten BS nach einer vorgegebenen Bestrahlungsstrategie zu erzeugen. Parameter für die jeweils gewünschte Bestrahlungsstrategie können dabei beispielsweise mit Hilfe des Terminals 25 gesetzt werden.

Insbesondere bei dem oben erwähnten kontinuierlichen Schneidprozess macht die Fokusbahn (d. h. die Bahn, entlang derer der Fokusbereich von der Fokussiereinrichtung zum Schneiden bewegt wird) ganz andere Bewegungen als der Scankopf bzw. das Abräummodul bzw. das Werkstück. Während Fokus und Düse sich entlang der Schnittfuge vergleichsweise schnell bewegen, folgen Abräummodul, Fokussiereinrichtung und abgestimmt zum Schnittverlauf auch das Werkstück auf der Rollenbahn vorzugsweise nur langsam dem Schneidprozess derart, dass der gerade aktive Schneidbereich immer mehr oder weniger zentral im Scanfeld und auch zentral im Absaugfeld liegt.

Es soll hier noch einmal darauf hingewiesen werden, dass die Bearbeitungseinrichtung 1 auch noch eine Vielzahl weiterer Komponenten umfassen kann, beispielsweise verschiedene Sensoren oder Messeinrichtungen, die Messwerte an die Steuereinrichtung 20 liefern, sodass diese den gesamten Prozess in geeigneter Weise kontrollieren und gegebenenfalls auch auf Fehler reagieren kann. Beispiele für solche Sensoren bzw. Messeinrichtungen wären Sensoren zur Überwachung der Laserleistung, Sensoren zur Überwachung von Pressluftdruck bzw. Unterdruck für die Düsenvorrichtung, Sensoren zur Überwachung einer Filtereinheit für die Absaugung, Sensoren zu Messung des z-Abstandes zur Werkstückoberfläche, Sensoren zur Messung der Kantenposition des Werkstücks etc.

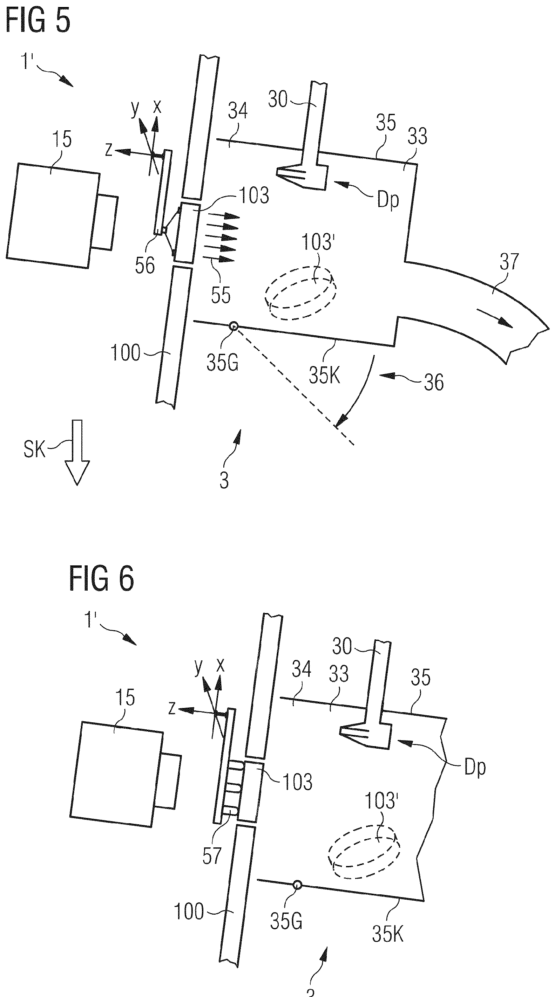

Außerdem sei auch noch einmal darauf hingewiesen, dass die Erfindung nicht auf eine horizontale Flachglasbearbeitungseinrichtung in der dargestellten Art beschränkt ist. Insbesondere ist es möglich und vorteilhaft, dass die gesamte Bearbeitungsvorrichtung 1' als vertikale Flachglasbearbeitungseinrichtung 1' (oder sogenannte "Vertikal-Bohrmaschine" 1') aufgebaut ist, wie sie beispielhaft schematisch in Figur 5 und 6 gezeigt ist.

Bei dieser "Vertikal-Bohrmaschine" 1' ist die Halterung (nicht dargestellt) so angeordnet, dass das Werkstück 100 nahezu vertikal (hochkant), beispielsweise unter einem kleinen Winkel von z.B. 6-20° in Bezug zur vertikalen Raumachse, entlang der Halterung geführt wird. Eine umfangreiche Beschreibung, insbesondere zu einem laserseitigen Teil einer solchen "Vertikal-Bohrmaschine" 1' findet sich in der DE 10 2020 123 146, so dass darauf verwiesen wird.

Die hier in den Figuren 5 und 6 gezeigte "Vertikal-Bohrmaschine" 1' stellt eine weiterentwickelte Version der in der DE 10 2020 123 146 gezeigten "Vertikal-Bohrmaschine" 1' dar.

Figur 5 zeigt zwei mögliche (grundsätzlich unabhängige) Varianten bei einer "Vertikal-Bohrmaschine" 1' ein vorgeschnittenes Werkstückteil 103 mit dem Abräummodul 3 aus dem übrigen Werkstück 100 zu entnehmen bzw. abzuräumen.

Bei einer ersten Variante gemäß Figur 5 wird das Werkstückteil 103 mittels eines durch die Absaugung 37 der Absaugeinrichtung 33 an der Absaugöffnung 34 erzeugten Vakuums 55 bzw. Unterdrucks 55 zur (hier rechten) Strahlungsaustrittsseite 102 des Werkstücks 100 bzw. Werkstückteils 103 ins Innere des Abräummoduls 3 bzw. eines Absaugkastens 35 des Abräummoduls 3 gesaugt (siehe das gestrichelt angedeutete Werkstückteil 103'). Dabei ist die Düse 30 gerade in einer seitlichen bzw. hier oberen Parkposition D_{P} geparkt, in der sie den Glasauswurf bzw. Werkstückauswurf nicht tangiert.

Bei einer zweiten Variante gemäß Figur 5 (welche sich speziell für größere Werkstückteile anbietet, die sich nicht mehr mittels eines Vakuums 55 bzw. Unterdrucks 55 ansaugen lassen) wird das Werkstückteil 103 (zum dargestellten Zeitpunkt gerade) mit einem beweglichen Vakuumgreifer 56 von einer (hier linken) Strahlungseintrittsseite 101 (wobei die Laserstrahlung des 3D-Scankopfs 15 gerade deaktiviert ist) angesaugt und gegriffen, um auf diese Weise aus dem übrigen Werkstück 100 ohne die Gefahr eines Verkantens abgeräumt bzw. entnommen zu werden. Das Werkstückteil 103 kann dabei zur Strahlungseintrittsseite 101 (nach extern z. B. auf ein Förderband (nicht dargestellt)) oder zur Strahlungsaustrittsseite 102 (intern über das Abräummodul 3) hin abgeräumt bzw. ausgeworfen werden. Aus dem Abräummodul 3 kann das Werkstückteil 103' mittels der Klappe 35K durch die Entleerungsöffnung 36 des Absaugkastens 35 des Abräummoduls 3 hinausbefördert werden, z. B. auf dasselbe Förderband.

Bei einer dritten Variante gemäß Figur 6 ist das Werkstückteil 103 einmal zu einem ersten Zeitpunkt noch innerhalb des übrigen Werkstücks 100 vor dem Glasauswurf bzw. Werkstückteilauswurf gezeigt, wobei gerade ein beweglicher Stößel 57 an der Strahlungseintrittsseite 101 des Werkstücks 100 "anklopft" bzw. im Begriff ist, eine Ausstoßbewegung auszuführen. Bei dem Stößel 57 handelt es sich hier um einen beweglichen Arm mit drei nebeneinander angeordneten Stiften oder Noppen, um die beabsichtigte Ausstoßbewegung bzw. einen Impuls gleichmäßiger auf das auszuwerfende Werkstückteil 103 ausüben zu können. Auch hier ist wieder die Laserstrahlung des 3D-Scankopfs 15 gerade deaktiviert und die Düse 30 in einer oberen Parkposition D_{P} positioniert.

Weiterhin ist das Werkstückteil 103' (in gestrichelter Darstellung) ein weiteres Mal zu einem späteren Zeitpunkt im Inneren des Abräummoduls 3 nach Ausübung des Impulses bzw. Stoßes des Stößels 57 gezeigt, welcher dafür gesorgt hat, dass das ehemals vorgeschnittene Werkstückteil 103' ins Abräummodul 3 ausgeworfen bzw. abgeräumt wurde, um dort beispielsweise durch die unterseitig in Richtung zur Schwerkraft SK am Abräummodul 3 befindliche Klappe 35K entnommen zu werden. Die Klappe 35K weist hierzu wieder ein entsprechendes Klappengelenk 35G zum Öffnen auf.

Eine solche Vertikalbohrmaschine 1' erleichtert insbesondere bei Flachglas den Transport der Werkstücke zu und von der Glasbearbeitungsvorrichtung, da üblicherweise Flachglas ohnehin in einer nahezu vertikalen Stellung gelagert wird. Auf aufwendige Umlagerungsvorrichtungen, um das Flachglas erst in eine liegende Position zu bringen, kann dann verzichtet werden, was zum einen eine Kostenersparnis bedeutet und zum anderen auch den Platzbedarf reduziert. Bei einer vertikalen Ausrichtung des Werkstücks kann ein Herunterfallen von Abschnitten oder Ausschnitten bzw. Bohrkernen effektiv durch Greifer (z. B. Vakuumsauger) verhindert werden, zumindest, wenn diese eine kritische Größe überschreiten, um Schäden an der Maschine und am Werkstück bzw. Abschnitt selbst zu vermeiden.

Anhand von Figur 4 wird nun wieder ein zweites Ausführungsbeispiel einer horizontalen Flachglasbearbeitungseinrichtung bzw. erfindungsgemäßen Bearbeitungsvorrichtung 1 zum Schneiden von Flachglas 100 in horizontaler Anordnung beschrieben. Dabei können die Lasereinrichtung mit dem Scankopf 15 und das Abräummodul 3 wie bereits im Rahmen des ersten Ausführungsbeispiels erläutert aufgebaut sein.

Im Unterschied zum ersten Ausführungsbeispiel umfasst das Abräummodul 3 allerdings zusätzlich eine Abstützvorrichtung 50 innerhalb des Absaugkastens 35. Bei der Abstützvorrichtung 50 handelt es sich hier um einen Ausleger mit einer flächigen Stützfläche 50W, welcher zum Abstützen bzw. Unterstützen eines zu trennenden Werkstückteils 103 aus einer seitlichen vertikalen Passivposition 50P mittels eines hier pneumatisch betriebenen Antriebs 51 über ein Gelenk 53 in eine aktive horizontale Stützposition 50S geschwenkt werden kann, wobei ggf. die Abstützvorrichtung 50 für das letzte Stück im Wesentlichen in der Dicke des Werkstücks 100 vertikal hinaufgefahren werden kann, um das Werkstückteil 103 auch später wieder vertikal aus dem übrigen Werkstück 100 absenken zu können). In Figur 4 ist die Abstützvorrichtung 50, 50' zur besseren Veranschaulichung einmal gestrichelt in der passiven Stellung bzw. Passivposition 50P (siehe Abstützvorrichtung 50') und einmal mit durchgezogenen Linien in der aktiven Stützposition 50S (siehe Abstützvorrichtung 50) gezeigt.

Zu Anfangs eines Schnitts zum Ausschneiden eines Werkstückteils 103 aus dem übrigen Werkstück 100 kann die Abstützvorrichtung zunächst immer in der vertikalen Passivposition 50P am Rande des Absaugkastens 35 angeordnet sein, so dass sie die innerhalb des Absaugfelds AF unterhalb des Schnitts arbeitende Düse 30 nicht beeinträchtigt. Gegen Ende eines Schnitts, wenn der Werkstückteil 103 relativ zum übrigen Werkstück 100 fertig vorgeschnitten ist, d. h. das Werkstückmaterial in der Schnittfuge bis auf wenige verbliebene 100 µm auf der Strahlungseintrittsseite 101 abgetragen wurde, so dass der Werkstückteil 103 bereit zur abschließenden Trennung (z. B. ebenfalls mittels der Lasereinrichtung) vom übrigen Werkstück 100 ist, wird die Düse 30 in der seitlichen Parkposition D_{P} (siehe gestrichelt dargestellte Düse 30') positioniert und parallel die Abstützvorrichtung 50 in die Stützposition 50S verfahren. Nach der Trennung wird die Abstützvorrichtung 50 mit dem auf der Stützfläche 50W aufliegenden vom übrigen Werkstück 100 getrennten Werkstückteil 103 wieder nach unten gefahren und in die seitliche Passivposition 50P geschwenkt, so dass das Werkstückteil 103' rutschend in den Absaugkasten 35 zur Klappe 35K befördert wird.

Hierfür kann ein geeignetes Kriterium, welches Gewicht und Größe des Werkstückteils 103 berücksichtigt, zum Wechsel von der Düse 30 zur Abstützvorrichtung 50 in der Steuereinrichtung 20 implementiert werden.

Figur 7 zeigt noch einmal das Ausführungsbeispiel der Bearbeitungsvorrichtung 1 gemäß den Figuren 1 bis 3 in einer Seitenansicht in äußerst reduzierter bzw. vereinfachter Form, wobei hier an einem Werkstück 100 das Einbringen von Stegen 100s mittels Laserstrahlung L verdeutlicht werden soll. In der (hier rechten unteren) Ecke der Figur 7 ist zur räumlichen Veranschaulichung noch einmal das Werkstück 100 bzw. ein Ausschnitt des Werkstücks 100 im Bereich des Werkstückteils 103 mit den drei entlang einer Schnittkontur 111 noch verbliebenen Stegen 100s zum umgebenden Werkstück 100 in Aufsicht gezeigt. Zudem zeigt Figur 7 (links unten) einen vergrößerten Ausschnitt, welcher einen der drei Stege 100s der Schnittkontur 111 noch einmal mit der "Lupe" vergrößert von der Seite zeigt.

In einem ersten Prozessschritt wurde hier mit dem Laserstrahl L entlang einer kreisförmigen Schnittkontur 111 zum Ausschneiden bzw. Trennen eines vom übrigen Werkstück 100 zu trennenden Werkstückteils 103 (hier z. B. ein Bohrkern) von unten ein Schnitt 110 in das Werkstück 100 eingebracht. Dabei wurden drei gleichmäßig entlang der Schnittkontur 111 verteilte Stege 100s stehengelassen, wie anhand der vergrößerten Seitenansicht (hier links unten) auf einen der drei verbliebenen Stege 100s zu sehen ist.

Konkret wurde im ersten Prozessschritt beim Schneiden mittels eines Laserablationsverfahrens mit der Lasereinrichtung mittels Laserstrahlung L entlang der Schnittkontur 111 in der Schnittfuge des Schnitts 110 Werkstückmaterial zumindest jeweils in den Abschnitten der drei Stege 100s solange abgetragen, d. h. das Werkstück 100 wurde solange vorgeschnitten, bis jeweils nur noch ein sich in Richtung zur Strahlungseintrittsseite 101 und in Richtung des Bohrkerns (in diesem Beispiel das Rest-Werkstückteil) verjüngender Steg 100s mit einem Bruchteil der gesamten Materialstärke verblieb. Dieser Zustand ist in der besagten weiter vergrößerten Seitenansicht eines der drei Stege 100s gezeigt, in welcher die zu erwartende Abreiß- bzw. Trennzone Z des Stegs 100s markiert ist. Der Steg 100s verjüngt sich hier somit in zwei Raumrichtungen, wie sich aus der vergrößerten Seitenansicht sowie der Aufsicht ergibt. Die Verjüngung zur Strahlungseintrittsseite 101 hin, welche in der vergrößerten Seitenansicht zu sehen ist, hilft zusätzlich zur leichteren Durchtrennung auch um sogenannte "Hinterschneidungsprobleme" beim Einbringen des Schnitts 110 bzw. der Stege 100s zu vermeiden. Die Verjüngung in der anderen bzw. radialen Richtung zum zentralen Bohrkern bzw. Werkstückteil 103 (hier das Rest-Werkstückteil) sorgt für eine vom übrigen Werkstück 100 (hier das Nutz-Werkstückteil) ausreichend entfernte Sollbruchstelle im Schnitt 110, so dass beim Durchtrennen keine Schäden am Nutz-Werkstückteil entstehen.

Um nun das Werkstückteil 103 vollständig vom übrigen Werkstück 100 zu trennen, d. h. die verbliebenen Verbindungen endgültig zu durchtrennen, werden mittels Laserstrahlung L die drei sehr kleinen verbliebenen Stege 100s an ihrer dünnsten Stelle - hier direkt am Bohrkern - durchtrennt. Ggf. am Nutz-Werkstückteil befindliche Stegreste werden dann mittels des Lasers abgetrennt bzw. pulverisiert, so dass am Ende die gesamte Schnittfuge abgetragen ist. Das Werkstückteil 103' hat sich zuvor bei der Durchtrennung der Stege 100s kontrolliert aus dem übrigen Werkstück 100 herausgelöst. Das in Figur 7 gestrichelt angedeutete Werkstückteil 103' fällt gerade nach dem soeben beschriebenen Durchtrennen der Stege 100s kontrolliert in den Absaugkasten 35 hinein. Es konnte also sinngemäß aus dem übrigen Werkstück 100 abgeräumt werden.

In Figur 8 ist nun noch einmal ein ganz konkretes viertes Ausführungsbeispiel eines isolierten Abräummoduls 3 der Bearbeitungsvorrichtung (isoliert von den anderen Teilen der Bearbeitungsvorrichtung und ohne Verkleidung bzw. Gehäuse) gezeigt. Das Abräummodul 3 umfasst drei durch seitliche Schlitzöffnungen S1, S3 verbundene Bereiche B1, B2, B3: In einem mittleren "dreckigen" Bereich B2 befindet sich eine Absaugeinrichtung 33 mit einem Absaugfeld AF sowie ein sich nach unten in z-Richtung erstreckender Absaugschacht der Absaugeinrichtung 33. In den mittleren Bereich B2 ragt aus einem seitlichen (hier linken) Bereich B1 durch eine erste Schlitzöffnung S1 an einem länglichen Ausleger eine innerhalb des Absaugfelds AF bewegbare Düse 30 hinein. In dem betreffenden Bereich B1 ist der besagte Ausleger selbst wiederum an eine Verfahrmechanik und Steuerung zur Bewegung der Düse 30 in zwei zueinander orthogonalen Richtungen gekoppelt. Die Verfahrmechanik weist dazu eine untere Führungsschiene F_{Y} mit einem in y-Richtung geführten Rollschlitten R_{Y} und eine darauf angeordnete Führungsschiene F_{X} mit einem in x-Richtung geführten Rollschlitten R_{X} auf, an welchem wiederum der längliche Ausleger der Düse 30 befestigt ist. Mithilfe von Antriebswellen und Riemen (zu einem Antrieb der Verfahrmechanik) sind die Rollschlitten R_{X}, R_{Y} entlang der Führungsschienen F_{X}, Fy und damit die Düse 30 im Absaugfeld AF in zwei vektoriellen Düsenbewegungsrichtungen x_{D}, y_{D} bewegbar.

Im gegenüberliegenden seitlichen (hier rechten) Bereich B3 befindet sich eine durch die betreffende (hier rechte) Schlitzöffnung S3 in das Absaugfeld AF horizontal hineinfahrbare sowie anschließend in einer vertikalen z-Richtung zu einem Werkstück (nicht dargestellt) hinauffahrbare Stützfläche 50W einer Abstützvorrichtung 50. Die Abstützvorrichtung 50 umfasst dazu im rechten Bereich B3 eine geeignete Mechanik mit einem auf einer Führungsschiene F_{Y}' gelagerten Rollschlitten R_{Y}' zum seitlichen Verfahren in y-Richtung und einem darunter befindlichen Pneumatikstempel P_{Z} zum vertikalen Verfahren in einer z-Richtung. Zudem befindet sich im rechten Bereich eine dafür geeignete Steuerung, um die Abstützvorrichtung 50 entsprechend zu steuern.

Die beiden Schlitzöffnungen S1, S3 können mit hier nicht dargestellten flexiblen Bürsten möglichst luftdicht verschlossen sein, die auch bei Bewegungen der Düse 30 oder der Stützfläche 50W der Abstützvorrichtung 50 stets die betreffenden Komponenten umseitig möglichst luftdicht abdichtend einfassen bzw. einrahmen. Beim Hinein- und Hinausfahren der Stützfläche 50W wird diese damit automatisch von aufliegenden Fremdkörpern befreit bzw. abgekehrt, so dass also kaum Partikel in die seitlichen "sauberen" Bereiche B1, B3 des Abräummoduls 3 geraten oder sich beim nächsten Abstützvorgang störend zwischen Abstützfläche und Werkstückunterseite befinden. Die Stützfläche 50W der Abstützvorrichtung 50 weist in einem Bereich der zur Düse 30 weisenden Kante der Stützfläche 30W eine Aussparung 50A für die Düse 30 auf, in welcher Aussparung 50A die Düse 30 positioniert wird, wenn sie sich in der oben bereits beschriebenen Parkposition befindet. Die Aussparung 50A ist hier jedoch in der dargestellten perspektivischen Ansicht gerade teilweise verdeckt und auch nur nötig, falls die Düse 30 nicht ganz aus dem Absaugbereich herausgefahren wird.

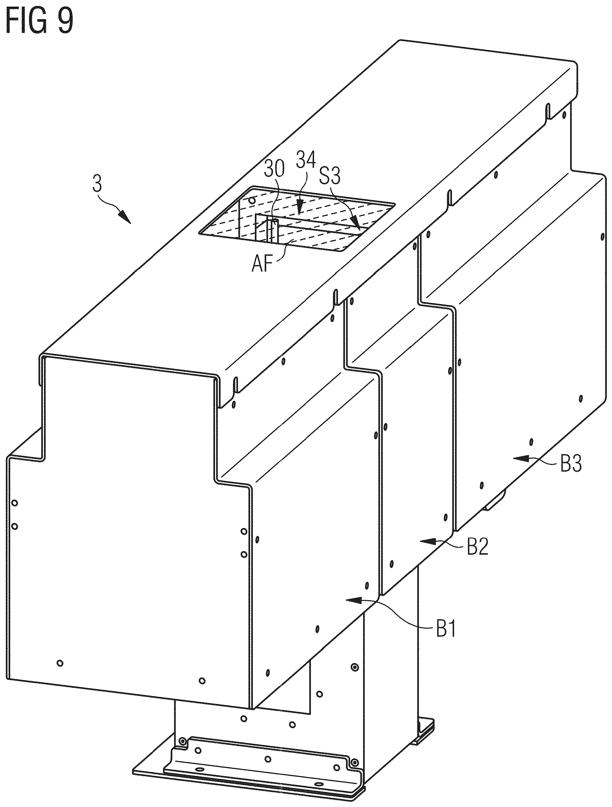

Figur 9 zeigt das Abräummodul 3 aus Figur 8 nun in einem verkleideten Zustand mit geschlossenen Gehäusewandungen. Es kann so unter die Halteeinrichtung, z. B. die Rollenbahn der Bearbeitungsvorrichtung montiert werden, wobei es mechanisch in x-/y-Richtung verstellbar und ansteuerbar ist (mit entsprechender Bewegungsmechanik bzw. Lagerung und Steuerung parallel zum Scanfeld SF wie oben erläutert).

Es wird abschließend noch einmal darauf hingewiesen, dass es sich bei den vorhergehend detailliert beschriebenen Abräummodulen lediglich um Ausführungsbeispiele handelt, welche vom Fachmann in verschiedenster Weise modifiziert werden können, ohne den Bereich der Erfindung zu verlassen. So sind beispielsweise die in den jeweiligen Ausführungsbeispielen gezeigten Materialauswurfeinrichtungen untereinander beliebig austauschbar und/oder kombinierbar. Zusätzlich dazu kann das Heraustrennen bzw. Abräumen von Werkstückteilen mittels des oben beschriebenen Einbringens von Stegen beim Vorschneiden unterstützt werden. Weiterhin schließt die Verwendung der unbestimmten Artikel "ein" bzw. "eine" nicht aus, dass die betreffenden Merkmale auch mehrfach vorhanden sein können.

### Bezugszeichenliste

1, 1' Vorrichtung / Bearbeitungsvorrichtung / Glasbearbeitungsvorrichtung
3 Abräummodul
11 Halteeinrichtung / Rollenbahn
12 Rollen
13 Scankopfsteuerung
15 Fokusverstelleinheit / 3D-Scankopf
16 Fokussiereinrichtung /
16b F-Theta-Linse
16a z-Shifter
17 Scaneinheit / Galvanometerscanner
18 Traverse
20 Steuereinrichtung
21 Recheneinheit / Bahnberechnungseinheit
22 Steuerschnittstelle
23 Schnittstelle
24 Bus
25 Terminal
30, 30' Düse
31 Düsenkanal
32 Zuluft-Anschluss für die Düse
33 Absaugeinrichtung / Absaugkasten
34 Absaugöffnung
35 Sammelbehälter
35K Klappe, geschlossen
35K' Klappe, geöffnet
35G Klappengelenk
36 Entleerungsöffnung
37 Abluft / Absaugung der Absaugeinrichtung
40 Vorschubeinrichtung (scankopfseitiger Teil)
41 Vorschubeinrichtung (halterungsseitiger Teil)
42 Höhenverfahreinrichtung
43 (Abräummodul-)Vorschubeinrichtung (absaugeinrichtungsseitiger Teil)
44 (Düsen-) Verfahrmechanik
50, 50' Abstützvorrichtung
50S Stützstellung
50P Passivstellung
50W Stützfläche
51 Antrieb / Schwenkmechanismus
52 Stifte
53 Gelenk
55 Vakuum / Unterdruck durch Absaugung
56 Vakuumgreifer
57 Stößel
60 Laser
61 Lichtleiter
100 Werkstück / Flachglas
100s Steg
101 Strahlungseintrittsseite
102 Strahlungsaustrittsseite
103, 103' Werkstückausschnitt
110 Schnitt
111 Schnittkontur
120 Schnittsegment
AF Absaugfeld
B1, B2, B3 Bereiche
BS Bestrahlungssteuerdaten
D_{P} Parkposition der Düse
F Fokusbereich / Fokus
F_{X}, F_{Y}, F_{Y}' Führungsschienen
L Laserstrahlung
P Fluidstrom / Gasstrom / Pressluftstrahl
P_{Z} Pneumatikstempel
R_{X}, R_{Y}, R_{Y}' Rollschlitten
S1, S3 Schlitzöffnungen
SD Steuerdaten
SF Scanfeld
SK Richtung der Schwerkraft
VR Vorschubrichtung
x, y, z Raumrichtungen des Bezugskoordinatensystems
y_{A}, vektorielle Absaugeinrichtungsbewegungsrichtung
x_{D}, y_{D} vektorielle Düsenbewegungsrichtungen
x_{S}, y_{S} vektorielle Scanrichtungen
x_{V}, y_{V} vektorielle Vorschubrichtung
Z Abreiß- / Trennzone

## Patentansprüche

1. Vorrichtung (1) zum Bearbeiten eines Werkstücks (100), insbesondere aus Glas, mit mindestens einer Lasereinrichtung (60) zur Erzeugung von Laserstrahlung (L) zur Durchführung eines Schneid- und/oder Trennverfahrens,
und mit zumindest
- einer Halteeinrichtung (11) für das Werkstück (100),
- einer Fokussiereinrichtung (16), um in das Werkstück (100) auf einer Strahlungseintrittsseite (101) eingestrahlte Laserstrahlung (L) im Bereich einer von der Strahlungseintrittsseite (101) abgewandten Strahlungsaustrittsseite (102) des Werkstücks (100) derart in einem Fokusbereich (F) zu fokussieren, dass im Fokusbereich (F) Werkstückmaterial abgetragen wird,
- einer Fokusverstelleinheit (15) mit zumindest einer Scaneinheit (17), um den Fokusbereich (F) in einem begrenzten Scanfeld (SF) zu bewegen,
- einer Vorschubeinrichtung (40, 41), um die Fokusverstelleinheit (15) mit dem Scanfeld (SF) in zumindest einer Richtung parallel zur Bezugsebene (x, y) relativ zum Werkstück (100) zu bewegen,
und **gekennzeichnet durch** ein Abräummodul (3) mit
- einer Absaugeinrichtung (33) zur Erzeugung eines flächigen Absaugfelds (AF) auf der Strahlungsaustrittsseite (102) des Werkstücks (100), welches zumindest einen Bereich eines Schnitts (110) um den Fokusbereich (F) im begrenzten Scanfeld (SF), vorzugsweise den gesamten Bereich des Scanfelds (SF), umfasst,
- einer Vorschubeinrichtung (40, 43), um das Absaugfeld (AF) koordiniert zum Scanfeld (SF) in zumindest einer Richtung parallel zur Bezugsebene (x, y) relativ zum Werkstück (100) zu bewegen,
- und einer innerhalb des Absaugfelds (AF) der Absaugeinrichtung (33) relativ zum Absaugfeld (AF) bewegbaren Düse (30) zum Ausblasen von abgetragenem Werkstückmaterial aus dem Schnitt (110).

2. Vorrichtung nach Anspruch 1 mit einer Steuereinrichtung (20), welche ausgebildet ist, um die Vorrichtung (1) zum Einbringen zumindest eines Schnitts (110) in das Werkstück (100) derart zu steuern, dass
- der Fokusbereich (F) zur schichtweisen Abtragung von Material in einem Schnittsegment (120) des Schnitts (110) mittels der Fokusverstelleinheit (15) im Bereich eines Scanfelds (SF) der Fokusverstelleinheit (15) bewegt wird,
- die Fokusverstelleinheit (15) zur Erweiterung des Schnitts (110) unter Verschiebung des Scanfelds (SF) in einer Vorschubrichtung (VR) bewegt wird,
- das Absaugfeld (AF) koordiniert, vorzugsweise parallel, mit dem Scanfeld (SF) der Fokusverstelleinheit (15) mitbewegt wird und die Düse (30) innerhalb des Absaugfelds (AF) der Absaugeinrichtung (33) relativ zum Absaugfeld (AF) bewegt wird.

3. Vorrichtung nach Anspruch 1 oder 2, wobei die Absaugeinrichtung (33) eine flächige, vorzugsweise rechteckige, Absaugöffnung (34) umfasst.

4. Vorrichtung nach einem der vorstehenden Ansprüche, wobei die Düse (30) in einer seitlichen Parkposition (D_{P}) außerhalb einer Falllinie eines gelösten Werkstückteils (103, 103') des Werkstücks (100) positionierbar ist.

5. Vorrichtung nach einem der vorstehenden Ansprüche, wobei das Abräummodul (3), vorzugsweise die Absaugeinrichtung (33), einen Sammelbehälter (35) zum Aufsammeln von abgetragenem Werkstückmaterial und/oder von zumindest einem abgeschnittenen Werkstückteil des Werkstücks (100) umfasst.

6. Vorrichtung nach Anspruch 5, wobei der Sammelbehälter (35) mindestens eine Entleerungsöffnung (36), vorzugsweise mit einer zu öffnenden Klappe (35K) zum Entleeren, umfasst, welche vorzugsweise derart ausgebildet und angeordnet ist, dass sich der Sammelbehälter (35) zur Entleerung in Richtung der Schwerkraft öffnen lässt.

7. Vorrichtung nach einem der vorstehenden Ansprüche, wobei das Abräummodul (3) eine Abstützvorrichtung (50) zur Abstützung zumindest eines vom übrigen Werkstück (100) zu trennenden Werkstückteils (103) in der Vorrichtung (1) umfasst, welche zumindest das Werkstückteil (103) bis zum Abräumen vor der vollständigen Trennung vom übrigen Werkstück (100) stabilisiert.

8. Vorrichtung nach Anspruch 7, wobei die Abstützvorrichtung (50) einen Antrieb (51) zum Verbringen, vorzugsweise Schwenken, der Abstützvorrichtung (50) in eine werkstückhaltende Stützposition (50S) umfasst, wobei vorzugsweise das Verbringen mittels Verschwenken erfolgt
und/oder
wobei die Abstützvorrichtung (50) Mittel zum linearen Verfahren der Abstützvorrichtung (50) in einer Richtung parallel zum Absaugfeld (AF) sowie einer weiteren Richtung senkrecht zum Absaugfeld (AF) umfasst.

9. Vorrichtung nach Anspruch 7 oder 8, wobei die Abstützvorrichtung (50) werkstückseitig eine Stützfläche (50W) aufweist,
wobei vorzugsweise die Stützfläche (50W) eine Vielzahl von gleichmäßig verteilt angeordneten, erhabenen Oberflächenstrukturen (52), besonders bevorzugt Rillen, ganz besonders bevorzugt Stifte (52) aufweist.

10. Vorrichtung nach einem der vorstehenden Ansprüche, wobei das Abräummodul (3) eine Werkstückteilauswurfeinrichtung (55, 56, 57) umfasst, um einen vorgeschnittenen Werkstückteil (103), vorzugsweise einen Rest-Werkstückteil (103), des Werkstücks (100) vom übrigen Werkstück (100) zu trennen, und besonders bevorzugt aus dem Abräummodul (3) hinauszubefördern.

11. Vorrichtung nach Anspruch 10, wobei die Werkstückteilauswurfeinrichtung (55, 56, 57) einen beweglich gelagerten Vakuumgreifer (56) umfasst, um einen vorgeschnittenen Werkstückteil (103) des Werkstücks (100) zur Strahlungseintrittsseite (101) des Werkstücks (100) hin kontrolliert herauszulösen.

12. Verfahren zum Bearbeiten eines Werkstücks (100), insbesondere aus Glas, mittels einer Vorrichtung (1) nach einem der vorstehenden Ansprüche 1 bis 11,
- wobei in das Werkstück (100) auf einer Strahlungseintrittsseite (101) Laserstrahlung (L) eingestrahlt und im Bereich einer von der Strahlungseintrittsseite (101) abgewandten Strahlungsaustrittsseite (102) des Werkstücks (100) derart in einem Fokusbereich (F) fokussiert wird, dass im Fokusbereich (F) Werkstückmaterial abgetragen wird,
- wobei der Fokusbereich (F) mittels einer Fokusverstelleinheit (15) in einem begrenzten Scanfeld (SF) der Fokusverstelleinheit (15) bewegt wird,
- wobei die Fokusverstelleinheit (15) unter Verschiebung des Scanfelds (SF) in einer Vorschubrichtung (VR) parallel zur Bezugsebene (x, y) relativ zum Werkstück (100) bewegt wird,
- wobei das Werkstück (100) auf der Strahlungsaustrittsseite (102) im Bereich eines koordiniert mit dem Scanfeld (SF) der Fokusverstelleinheit (15) mitbewegten Absaugfelds (AF) mittels einer Absaugeinrichtung (33) abgesaugt wird, so dass zumindest ein Bereich eines Schnitts (110) um den Fokusbereich (F) im begrenzten Scanfeld (SF), vorzugsweise der gesamte Bereich des Scanfelds (SF), vom Absaugfeld (AF) erfasst ist und wobei mittels einer innerhalb des Absaugfelds (AF) der Absaugeinrichtung (33) relativ zum Absaugfeld (AF) bewegten Düse (30) des Abräummoduls (3) abgetragenes Werkstückmaterial aus dem Schnitt (110) im Werkstück (100) ausgeblasen wird.

13. Verfahren nach Anspruch 12, wobei ein vom übrigen Werkstück (100) zu trennendes Werkstückteil (103) solange vom Werkstück (100) mit der Lasereinrichtung (60) vorgeschnitten wird, bis noch zumindest ein Steg (100S) zwischen dem übrigen Werkstück (100) und dem Werkstückteil (103) verbleibt,
und abschließend der zumindest eine verbliebene Steg (100S), vorzugsweise mittels der Lasereinrichtung (60), kontrolliert durchtrennt wird,
wobei optional der Werkstückteil (103) zusätzlich mittels einer Abstützvorrichtung (50) unterstützend gehalten wird, während der zumindest eine verbliebene Steg (100S) kontrolliert getrennt wird,
und wobei vorzugsweise abschließend die am Werkstückteil (103) und/oder am übrigen Werkstück (100) verbliebenen Stegreste des zumindest einen Stegs (100S), vorzugsweise mittels der Lasereinrichtung (60), entfernt werden.

14. Verfahren nach Anspruch 12 oder 13, wobei zumindest ein bereits vorgeschnittenes vom übrigen Werkstück (100) zu trennendes Werkstückteil
- mittels eines durch die Absaugeinrichtung (33) erzeugten Unterdrucks (55)
und/oder
- kontrolliert mittels eines Vakuumgreifers (56) des Abräummoduls (3) auf der Strahlungsaustrittsseite (102) oder vorzugsweise auch auf der Strahlungseintrittsseite (101)
und/oder
- mittels zumindest eines beweglich gelagerten Stößels (57) auf der Strahlungseintrittsseite (101) ausgeworfen oder getrennt wird.

## Claims

1. A device (1) for machining a workpiece (100), in particular made of glass, with at least one laser system (60) for generating laser radiation (L) to perform a cutting and/or separating process,
and with at least
- a retaining device (11) for the workpiece (100),
- a focusing device (16), so as to focus laser radiation (L) radiated onto a radiation entry side (101) in the workpiece (100) in the area of a radiation exit side (102) of the workpiece (100) facing away from the radiation entry side (101) in a focus area (F) in such a way as to remove workpiece material in the focus area (F),
- a focus adjustment unit (15) with at least one scanning unit (17), so as to move the focus area (F) in a limited scanning field (SF),
- a feeding mechanism (40, 41) to move the focus adjustment unit (15) with the scanning field (SF) in at least one direction parallel to the reference plane (x, y) relative to the workpiece (100),
and **characterized by** a clearing module (3) with
- a suction device (33) for generating a wide suction field (AF) on the radiation exit side (102) of the workpiece (100), which comprises at least one area of a cut (110) around the focus area (F) in a limited scanning field (SF), preferably the entire area of the scanning field (SF),
- a feeding mechanism (40, 43) to move the suction field (AF) coordinated with the scanning field (SF) in at least one direction parallel to the reference plane (x, y) relative to the workpiece (100),
- and a nozzle (30) movable within the suction field (AF) of the suction device (33) relative to the suction field (AF) to blow removed workpiece material out of the cut (110).

2. The device according to claim 1, with a controller (20) designed to control the device (1) for introducing at least one cut (110) into the workpiece (100) in such a way that
- the focus area (F) for removing material layer by layer is moved in a cut segment (120) of the cut (110) by means of the focus adjustment unit (15) in the area of a scanning field (SF) of the focus adjustment unit (15),
- the focus adjustment unit (15) is moved to expand the cut (110) while displacing the scanning field (SF) in a feeding direction (VR),
- the suction field (AF) is moved coordinated, preferably parallel, with the scanning field (SF) of the focus adjustment unit (15), and the nozzle (30) is moved within the suction field (AF) of the suction device (33) relative to the suction field (AF).

3. The device according to claim 1 or 2, wherein the suction device (33) comprises a wide, preferably rectangular, suction port (34).

4. The device according to one of the preceding claims, wherein the nozzle (30) can be positioned in a lateral parking position (D_{P}) outside of a fall line of a detached workpiece part (103, 103') of the workpiece (100).

5. The device according to one of the preceding claims, wherein the clearing module (3), preferably the suction device (33), comprises a collection container (35) for accumulating removed workpiece material and/or at least one cut off workpiece part of the workpiece (100).

6. The device according to claim 5, wherein the collection container (35) comprises at least one emptying opening (36), preferably with a flap (35K) to be opened for emptying, which is preferably designed and arranged in such a way that the collection container (35) can be opened for gravity-fed emptying.

7. The device according to one of the preceding claims, wherein the clearing module (3) comprises a supporting device (50) for supporting at least one workpiece part (103) to be separated from the remaining workpiece (100) in the device (1), which stabilizes at least the workpiece part (103) up until clearing before the complete separation from the remaining workpiece (100).

8. The device according to claim 7, wherein the supporting device (50) comprises a drive (51) for conveying, preferably swiveling, the supporting device (50) into a workpiece-holding support position (50S), wherein conveying preferably takes place via swiveling,
and/or
wherein the supporting device (50) comprises means for linearly moving the supporting device (50) in a direction parallel to the suction field (AF) as well as in another direction perpendicular to the suction field (AF).

9. The device according to claim 7 or 8, wherein the supporting device (50) has a supporting surface (50W) on the workpiece side,
wherein the supporting surface (50W) preferably has a plurality of uniformly distributed, elevated surface structures (52), particularly preferably grooves, more particularly preferably pins (52).

10. The device according to one of the preceding claims, wherein the clearing module (3) comprises a workpiece part ejection device (55, 56, 57), so as to separate a precut workpiece part (103), preferably a residual workpiece part (103), of the workpiece (100) from the remaining workpiece (100), and particularly preferably convey it out of the clearing module (3).

11. The device according to claim 10, wherein the workpiece part ejection device (55, 56, 57) comprises a movably mounted vacuum gripper (56), so as to controllably detach a precut workpiece part (103) of the workpiece (100) toward the radiation entry side (101) of the workpiece (100).

12. A method for machining a workpiece (100), in particular made out of glass, by means of a device (1) according to one of the preceding claims 1 to 11,
- wherein laser radiation (L) is radiated into the workpiece (100) on a radiation entry side (101) and focused in a focus area (F) in the area of a radiation exit side (102) of the workpiece (100) facing away from the radiation entry side (101) in such a way as to remove workpiece material in the focus area (F),
- wherein the focus area (F) is moved within a limited scanning field (SF) of the focus adjustment unit (15) by means of a focus adjustment unit (15),
- wherein the focus adjustment unit (15) is moved relative to the workpiece (100) while the scanning field (SF) is displaced in a feeding direction (VR) parallel to the reference plane (x, y),
- wherein the workpiece (100) is suctioned on the radiation exit side (102) in the area of a suction field (AF) moved in coordination with the scanning field (SF) of the focus adjustment unit (15) by means of a suction device (33), so that at least an area of a cut (110) around the focus area (F) in the limited scanning field (SF), preferably the entire area of the scanning field (SF), is acquired by the suction field (AF), and wherein workpiece material removed by means of a nozzle (30) of the clearing module (3) moved within the suction field (AF) of the suction device (33) relative to the suction field (AF) is blown out of the cut (110) in the workpiece (100).

13. The method according to claim 12, wherein a workpiece part (103) to be separated from the remaining workpiece (100) is precut from the workpiece (100) with the laser system (60) until such time as at least one web (100S) still remains between the remaining workpiece (100) and the workpiece part (103),
and the at least one remaining web (100S) is then controllably separated, preferably by means of the laser system (60),
wherein the workpiece part (103) is optionally additionally held in place by means of a supporting device (50), while the at least one remaining web (100S) is controllably separated,
and wherein the web residues of the at least one web (100S) remaining on the workpiece part (103) and/or on the remaining workpiece (100) are then preferably removed, preferably by means of the laser system (60).

14. The method according to claim 12 or 13, wherein at least an already precut workpiece part to be separated from the remaining workpiece (100)
- is ejected or separated by means of a vacuum (55) generated by the suction device (33) and/or
- controlled by means of a vacuum gripper (56) of the clearing module (3) on the radiation exit side (102) or preferably also on the radiation entry side (101)
and/or
- by means of at least one movably mounted plunger (57) on the radiation entry side (101).

## Revendications

1. Dispositif (1) pour travailler une pièce (100), en particulier en verre, avec au moins un système à laser (60) pour produire un faisceau laser (L) pour exécuter un procédé de découpe et/ou de séparation,
et avec au moins
- un dispositif de maintien (11) pour la pièce (100),
- un dispositif de focalisation (16), pour concentrer le faisceau de laser (L) irradié dans la pièce (100) sur un côté d'entrée de faisceau (101) dans la zone d'un côté de sortie de faisceau (102) de la pièce (100) éloigné du côté d'entrée de faisceau (101) de telle manière dans une zone focalisée (F) que du matériau de pièce est enlevé dans la zone focalisée (F),
- une unité de réglage de la focalisation (15) avec au moins une unité de balayage (17), pour déplacer la zone focalisée (F) dans un champ de balayage limité (SF),
- un dispositif d'avance (40, 41), pour déplacer l'unité de réglage de la focalisation (15) avec le champ de balayage (SF) dans au moins une direction parallèlement au plan de référence (x, y) par rapport à la pièce (100),
et **caractérisé par** un module d'évacuation (3) avec
- un système d'aspiration (33) pour produire un champ d'aspiration (AF) en surface sur le côté de sortie de faisceau (102) de la pièce (100), lequel comprend au moins une zone d'une coupe (110) autour de la zone focalisée (F) dans un champ de balayage (SF) limité, de préférence toute la zone du champ de balayage (SF),
- un dispositif d'avance (40, 43) pour déplacer le champ d'aspiration (AF) en coordination avec le champ de balayage (SF) dans au moins une direction parallèlement au plan de référence (x, y) par rapport à la pièce (100),
- et une buse (30) déplaçable à l'intérieur du champ d'aspiration (AF) du système d'aspiration (33) par rapport au champ d'aspiration (AF) pour souffler du matériau de pièce enlevé de la coupe (110).

2. Dispositif selon la revendication 1 avec un système de commande (20), lequel est constitué pour commander le dispositif (1) pour mettre en oeuvre au moins une coupe (110) dans la pièce (100) de telle manière que
- la zone focalisée (F) est déplacée pour l'enlèvement de matériau par couche dans un segment de coupe (120) de la coupe (110) au moyen de l'unité de réglage de la focalisation (15) dans la zone d'un champ de balayage (SF) de l'unité de réglage de la focalisation (15),
- l'unité de réglage de la focalisation (15) est déplacée pour élargir la coupe (110) en déplaçant le champ de balayage (SF) dans une direction d'avance (VR),
- le champ d'aspiration (AF) est déplacé en coordination, de préférence parallèlement, avec le champ de balayage (SF) de l'unité de réglage de la focalisation (15), et la buse (30) est déplacée à l'intérieur du champ d'aspiration (AF) du système d'aspiration (33) par rapport au champ d'aspiration (AF).

3. Dispositif selon la revendication 1 ou 2, sachant que le système d'aspiration (33) comprend une ouverture d'aspiration (34) en surface, de préférence rectangulaire.

4. Dispositif selon l'une quelconque des revendications précédentes, sachant que la buse (30) peut être positionnée dans une position d'attente latérale (D_{P}) en dehors d'une ligne de chute d'une partie de pièce détachée (103, 103') de la pièce (100).

5. Dispositif selon l'une quelconque des revendications précédentes, sachant que le module d'évacuation (3), de préférence le système d'aspiration (33), comprend un bac de collecte (35) pour collecter du matériau de pièce enlevé et/ou au moins une partie de pièce découpée de la pièce (100).

6. Dispositif selon la revendication 5, sachant que le bac de collecte (35) comprend au moins une ouverture de vidage (36), de préférence avec un volet à ouvrir (35K) pour vider, lequel est constitué et disposé de préférence de telle manière que le bac de collecte (35) peut s'ouvrir pour vidage en direction de la force de gravité.

7. Dispositif selon l'une quelconque des revendications précédentes, sachant que le module d'évacuation (3) comprend un dispositif de soutien (50) pour soutenir au moins une partie de pièce (103) à séparer de la pièce restante (100) dans le dispositif (1), lequel stabilise au moins la partie de pièce (103) jusqu'à l'évacuation avant la séparation complète de la pièce restante (100).

8. Dispositif selon la revendication 7, sachant que le dispositif de soutien (50) comprend un système d'entraînement (51) pour transférer, de préférence faire pivoter, le dispositif de soutien (50) dans une position de soutien maintenant la pièce (50S), sachant de préférence que le transfert a lieu au moyen du pivotement,
et/ou
sachant que le dispositif de soutien (50) comprend des moyens pour le déplacement linéaire du dispositif de soutien (50) dans une direction parallèlement au champ d'aspiration (AF) ainsi que dans une autre direction perpendiculairement au champ d'aspiration (AF).

9. Dispositif selon la revendication 7 ou 8, sachant que le dispositif de soutien (50) comporte du côté pièce une surface d'appui (50W),
sachant de préférence que la surface d'appui (50W) comporte une pluralité de structures de surface (52) en relief, disposées réparties uniformément, en particulier de préférence des sillons, tout particulièrement de préférence des pointes (52).

10. Dispositif selon l'une quelconque des revendications précédentes, sachant que le module d'évacuation (3) comprend un système d'éjection de partie de pièce (55, 56, 57) pour séparer une partie de pièce prédécoupée (103), de préférence une partie de pièce résiduelle (103), de la pièce (100) de la pièce restante (100), et évacuer en particulier de préférence du module d'évacuation (3).

11. Dispositif selon la revendication 10, sachant que le système d'éjection de partie de pièce (55, 56, 57) comprend un préhenseur sous vide logé mobile (56) pour détacher de façon contrôlée une partie de pièce prédécoupée (103) de la pièce (100) vers le côté d'entrée de faisceau (101) de la pièce (100).

12. Procédé pour travailler une pièce (100), en particulier en verre, au moyen d'un dispositif (1) selon l'une quelconque des revendications précédentes 1 à 11,
- sachant qu'un faisceau laser (L) est irradié dans la pièce (100) sur un côté d'entrée de faisceau (101) et est concentré dans une zone focalisée (F) dans la zone d'un côté de sortie de faisceau (102) de la pièce (100) éloigné du côté d'entrée de faisceau (101) de telle manière dans la zone focalisée (F) que du matériau de pièce est enlevé dans la zone focalisée (F),
- sachant que la zone focalisée (F) est déplacée au moyen d'une unité de réglage de la focalisation (15) dans un champ de balayage limité (SF) de l'unité de réglage de la focalisation (15),
- sachant que l'unité de réglage de la focalisation (15) est déplacée en déplaçant le champ de balayage (SF) dans une direction d'avance (VR) parallèlement au plan de référence (x, y) par rapport à la pièce (100),
- sachant que la pièce (100) est aspirée sur le côté de sortie de faisceau (102) dans la zone d'un champ d'aspiration (AF) déplacé en coordination avec le champ de balayage (SF) de l'unité de réglage de la focalisation (15) au moyen d'un système d'aspiration (33) de telle sorte qu'au moins une zone d'une coupe (110) autour de la zone focalisée (F) est saisie par le champ d'aspiration (AF) dans le champ de balayage limité (SF), de préférence toute la zone du champ de balayage (SF) et sachant qu'au moyen d'une buse (30) du module d'évacuation (3) déplacée à l'intérieur du champ d'aspiration (AF) du système d'aspiration (33) par rapport au champ d'aspiration (AF) du matériau de pièce enlevé est soufflé de la coupe (110) dans la pièce (100).

13. Procédé selon la revendication 12, sachant qu'une partie de pièce (103) à séparer de la pièce restante (100) est prédécoupée de la pièce (100) avec le système à laser (60) jusqu'à ce qu'il reste encore au moins une nervure (100S) entre la pièce restante (100) et la partie de pièce (103),
et pour terminer au moins une nervure subsistante (100S) est sectionnée de façon contrôlée de préférence au moyen du système à laser (60),
sachant qu'en option, la partie de pièce (103) est en plus maintenue en soutien au moyen d'un système de soutien (50), alors qu'au moins une nervure subsistante (100S) est séparée de façon contrôlée,
et sachant finalement de préférence que les restes de nervure subsistants sur la partie de pièce (103) et/ou sur la pièce restante (100) d'au moins une nervure (100S) sont de préférence enlevés au moyen du système à laser (60).

14. Procédé selon la revendication 12 ou 13, sachant qu'au moins une partie de pièce à séparer de la pièce restante (100) déjà prédécoupée est éjectée ou séparée
- au moyen d'une dépression (55) produite par le système d'aspiration (33)
et/ou
- de façon contrôlée au moyen d'un préhenseur sous vide (56) du module d'évacuation (3) sur le côté de sortie de faisceau (102) ou de préférence également sur le côté d'entrée de faisceau (101)
et/ou
- sur le côté d'entrée de faisceau (101) au moyen d'au moins un poussoir (57) logé mobile.
